# EUROPÄISCHE PATENTSCHRIFT

(11) **EP 3 789 305 B1**
(45) Veröffentlichungstag und Bekanntmachung des Hinweises auf die Patenterteilung: **19.01.2022**
(21) Anmeldenummer: 19405014.2
(22) Anmeldetag: 05.09.2019
(51) Int. Cl.: B65B 1/04, B25J 21/00, B65B 3/00, B65B 31/02, B65B 55/02, B65B 69/00

(54) **ANLAGE MIT EINEM CONTAINMENT ZUM ASEPTISCHEN UMFÜLLEN EINES PULVERS**
INSTALLATION COMPRISING A CONTAINER FOR ASEPTICALLY FILLING A POWDER
INSTALLATION DOTÉE D'UN CONFINEMENT DE REMPLISSAGE ASEPTIQUE D'UNE POUDRE

(43) Veröffentlichungstag der Anmeldung: 10.03.2021
(73) Patentinhaber: SKAN AG, 4123 Allschwil (CH)
(72) Erfinder: BROM, Vincent, F-68220 Buschwiller (FR); LEHMANN, Frank Martin, CH-4102 Binningen (CH)
(74) Vertreter: Ullrich, Gerhard

(56) Entgegenhaltungen:
- EP-A1- 3 281 877
- EP-A1- 3 335 844
- WO-A1-2019/071339
- US-A1- 2016 272 347

## Beschreibung

### Anwendungsgebiet der Erfindung

Die vorliegende Erfindung betrifft eine Anlage mit einem Containment zum aseptischen Umfüllen eines Pulvers, nämlich zur Entleerung eines mit Pulver gefüllten Behälters in einen Sammelbehälter und/oder zum Befüllen eines Behälters mit Pulver aus einem Vorratsbehälter konzipiert. Das Containment weist eine von einem Gehäuse umgebene Arbeitskammer auf. Im Containment ist ein Roboter installiert, der eine über einen Schwenkbereich bewegliche Armanordnung besitzt. Bei Vorhandensein eines Sammelbehälters hat dieser einen aus der Arbeitskammer zuführenden Einlass und bei Vorhandensein eines Vorratsbehälters hat dieser einen in die Arbeitskammer abführenden Auslass. Der Behälter ist zumindest mit einen ersten Verschlusselement verschliessbar. Besonders vorteilhaft ist die Anlage zur Entleerung bzw. zum Befüllen einer grösseren Stückzahl von Behältern.

### Stand der Technik

Die Firma Comecer Netherlands, in NL-8500 AC Joure, offeriert eine Anlage mit einem Containment zum aseptischen Umfüllen eines Pulvers, insbesondere in Kannen abgefüllte pharmazeutische Produkte. In der Anlage sind mehrere Roboter installiert, und für die unterschiedlichen Arbeitsschritte machen sich Werkzeugwechsel erforderlich (siehe https://www.youtube.com/watch?v= ch8wiUysUZY; und https://www.youtube.com/watch?v=mwaLyBz8pMk; Internetauszüge vom 05.09.2019).

Dokument WO2019071339A1 offenbart eine aseptische Kammer mit Manipulatoren/ Robotern im inneren, wo man Medizin verarbeitet.

### Aufgabe der Erfindung

Ausgehend vom vorbekannten Stand der Technik liegt der Erfindung die Aufgabe zugrunde, eine weiterentwickelte Anlage mit einem Containment zum aseptischen Umfüllen eines Pulvers vorzuschlagen, um die Produktionseffizienz bei möglichst geringem apparativen Aufwand und Raumbedarf zu steigern. Hierbei soll die Anlage so konzipiert sein, dass die Entleerung bzw. das Befüllen einer grösseren Stückzahl von Behältern als Produktionslinie realisiert werden kann und zugleich die Anlage auch oder ausschliesslich zur Entnahme von Proben des gehandhabten Pulvers zur Kontrollzwecken unter geschützten Bedingungen nutzbar ist.

### Übersicht über die Erfindung

Die erfindungsgemässe Anlage mit einem Containment ist zum aseptischen Umfüllen eines Pulvers, nämlich zur Entleerung eines mit Pulver gefüllten Behälters in einen Sammelbehälter und/oder zum Befüllen eines Behälters mit Pulver aus einem Vorratsbehälter konzipiert. Das Containment weist eine von einem Gehäuse umgebene Arbeitskammer auf. Im Containment ist ein Roboter installiert, der eine über einen Schwenkbereich bewegliche Armanordnung besitzt. Bei Vorhandensein eines Sammelbehälters hat dieser einen aus der Arbeitskammer zuführenden Einlass und bei Vorhandensein eines Vorratsbehälters hat dieser einen in die Arbeitskammer abführenden Auslass. Der Behälter ist zumindest mit einen ersten Verschlusselement verschliessbar. Die Armanordnung ist mit einem Werkzeugträger verbunden, der an seiner Basis zumindest mit Klemmelementen zum Ergreifen des Behälters, einem Vakuumheber zum Ergreifen des ersten Verschlusselements sowie einem Passivteil einer Doppelklappe ausgestattet. Am Einlass in den Sammelbehälter und/oder am Auslass des Vorratsbehälters ist ein Transferkopf montiert ist, die jeweils in die Arbeitskammer hineinragen. Das Passivteil bildet zusammen mit einem im Transferkopf enthaltenen Aktivteil die Doppelklappe.

Nachfolgend werden spezielle Ausführungsformen der Erfindung definiert: Die Basis des Werkzeugträgers besitzt einen Anschlussflansch zur Verbindung mit der Armanordnung, wobei im Anschlussflansch eine Wiegezelle sitzen kann. Die Basis weist Positionierorgane auf, die zur form- und kraftschlüssigen Verbindung mit komplementären Arretierorganen, welche sich an einer Basis des Transferkopfes befinden, bestimmt sind und den druckdichten Zusammenbau zwischen Werkzeugträger und Transferkopf gewährleisten.

Die Basis des Werkzeugträgers ist zur temporären Aufnahme für ein Absaugwerkzeug oder ein Spül- und Sterilisationswerkzeug oder ein Bördelwerkzeug ausgestattet. Zur Fixierung dieser Werkzeuge an der Basis des Werkzeugträgers dienen die Klemmelemente allein oder zusätzlich. Das Absaugwerkzeug dient innerhalb der Arbeitskammer zur Reinigung des Werkzeugträgers und von ersten Verschlusselementen. Das Spül- und Sterilisationswerkzeug dient innerhalb der Arbeitskammer zur Reinigung und Sterilisation des Sammelbehälters, einschliesslich des Passivteils und des Aktivteils der Doppelklappe. Das Bördelwerkzeug dient innerhalb der Arbeitskammer zum Anbringen eines zweiten Verschlusselements am Behälter. Diese Werkzeuge sind innerhalb der Arbeitskammer lösbar an einer Parkstation zur Anwendung für den Zugriff mit dem an der Armanordnung des Roboters installierten Werkzeugträgers deponiert.

Der Werkzeugträger weist in der Komplettausstattung auch auf:
- einen Vibrator zum Lösen eines Restes von Pulver aus einem zu entleerenden Behälter;
- einen Reisshaken zur Entfernung eines eventuell an einem zu entleerenden Behälter vorhandenen zweiten Verschlusselements; und
- ein Probewerkzeug zur Entnahme einer Probe vom Pulver zu Kontrollzwecken.

Das erste Verschlusselement ist als ein auf die Mündung des Behälters aufgesetzter Deckel oder als ein in die Mündung des Behälters eingesetzter Stopfen ausgebildet. Das zweite Verschlusselement ist als am Behälter, über dem ersten Verschlusselement angebrachte Bördelkappe beschaffen.

Zum Einbringen des Werkzeugträgers in die Arbeitskammer, in steriler Beschaffenheit, ist ein hermetisch ummantelter Transferbehälter vorgesehen, und das Gehäuse weist einen Transferport auf. Der Transferbehälter ist zur Aufnahme des Werkzeugträgers und zum Andocken an den Transferport bestimmt. Im Zustand des an den Transferport angedockten Transferbehälters, bei geöffnetem Transferport und Transferbehälter, lässt sich der Werkzeugträger mit dem zugreifenden Roboter aus dem Transferbehälter in die Arbeitskammer ziehen.

Zum Einbringen von zu entleerenden oder zu befüllenden Behältern in die Arbeitskammer, in dekontaminierter Beschaffenheit, ist eine hermetisch ummantelte Schleuse vorgesehen, und das Gehäuse weist einen Schleusenport auf. Die Schleuse ist zur Aufnahme von Behältern und zum Andocken an den Schleusenport bestimmt. Im Zustand der an den Schleusenport angedockten Schleuse, bei geöffnetem Schleusenport und Schleuse, lassen sich die Behälter mit dem zugreifenden Roboter aus der Schleuse in die Arbeitskammer ziehen oder gelangen mittels einer Fördereinrichtung in die Arbeitskammer.

Die im Anschlussflansch sitzende Wiegezelle dient einer vergleichenden Gewichtsermittlung, nämlich:
- im Prozess der Entleerung eines mit Pulver gefüllten Behälters in den Sammelbehälter, zwischen dem in der Ausgangssituation mit Pulver gefülltem Behälter und dem entleerten Behälter; oder
- im Prozess des Befüllens eines leeren Behälters mit Pulver aus dem Vorratsbehälter, zwischen dem in der Ausgangssituation leeren Behälter und dem mit Pulver gefüllten Behälter.

Das zur Entnahme einer Probe vom Pulver zu Kontrollzwecken vorgesehene Probewerkzeug kommt im Prozess der Entleerung eines mit Pulver gefüllten Behälters in den Sammelbehälter oder im Prozess des Befüllens eines leeren Behälters mit Pulver aus dem Vorratsbehälter zum Einsatz. Alternativ dient die Anlage ausschliesslich zur Kontrolle der Eigenschaften des gehandhabten Pulvers mit Benutzung des Probewerkzeugs.

Die Schleuse ist auch zum Ausbringen von entleerten oder befüllten Behältern aus der Arbeitskammer sowie auch zum Ein- und Ausbringen von mit Pulver gefüllten Behältern in bzw. aus der Arbeitskammer zwecks Entnahme einer Testmenge mit dem Probewerkzeug zur Kontrolle der Eigenschaften des gehandhabten Pulvers nutzbar. Oder zum Ausbringen von entleerten oder befüllten Behältern aus der Arbeitskammer sowie auch zum Ein- und Ausbringen von mit Pulver gefüllten Behältern in bzw. aus der Arbeitskammer zwecks Entnahme einer Testmenge mit dem Probewerkzeug zur Kontrolle der Eigenschaften des gehandhabten Pulvers am Containment ist eine zweite Schleuse oder ein Mousehole vorgesehen.

Für den Prozess des Befüllens eines leeren Behälters mit Pulver aus dem Vorratsbehälter ist zwischen Vorratsbehälter und Transferkopf eine Dosiervorrichtung zur Zuteilung der gewünschten Füllmenge an Pulver angeordnet.

Der zum Sammelbehälter zugehörige Transferkopf ist am Gehäuse des Containments, vorzugsweise an einem Bodenelement, verankert, und sich ein Kanalstück erstreckt sich vom Transferkopf zum Sammelbehälter. Der zum Vorratsbehälter zugehörige Transferkopf ist am Gehäuse des Containments, vorzugsweise an einem Deckenelement, verankert.

### Kurzbeschreibung der beigefügten Zeichnungen

Es zeigen:
Figur 1 - die erfindungsgemässe Anlage mit einem Containment zum aseptischen Umfüllen eines Pulvers, in Gesamtansicht;
Figur 2 - die Anlage gemäss Figur 1 in der Anordnung zur Entleerung eines Behälters mit einer Pulverfüllung in einen Sammelbehälter;

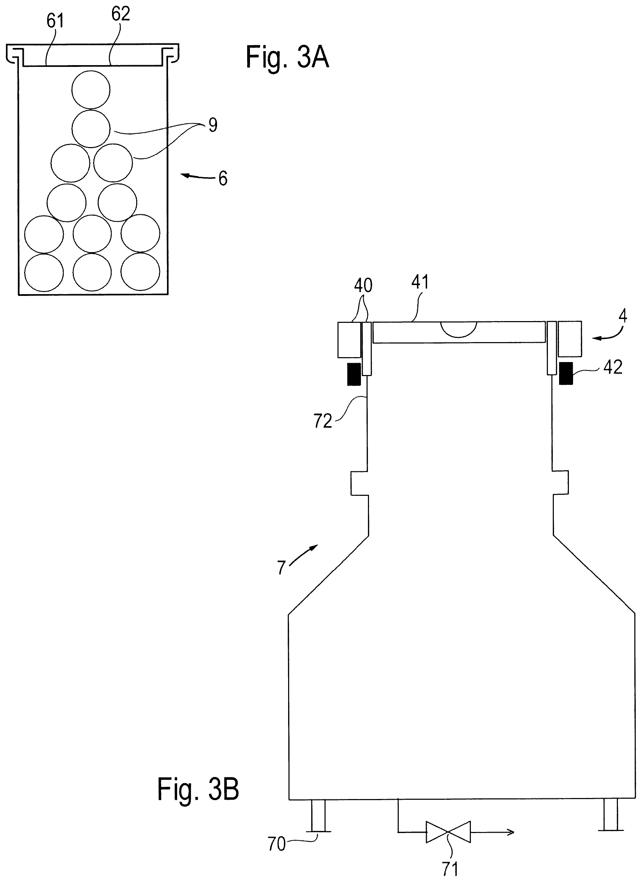

Figur 3A - einen Behälter mit der Pulverfüllung aus den Figuren 1 und 2, in Vergrösserung;
Figur 3B - den zu befüllenden Sammelbehälter aus den Figuren 1 und 2, in Vergrösserung;
Figuren 4A bis 4E: den Werkzeugträger aus den Figuren 1 und 2 mit verschiedener Bestückung;

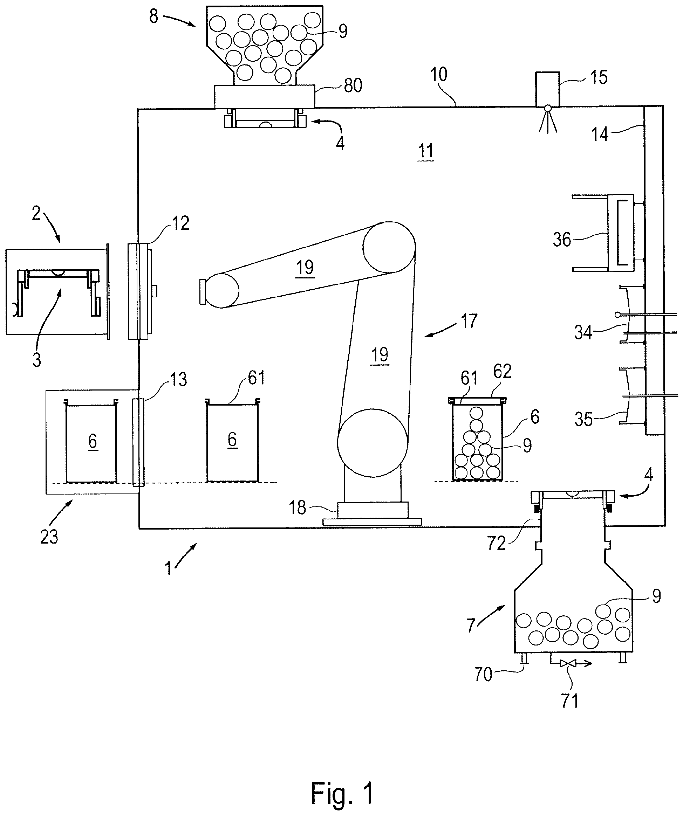

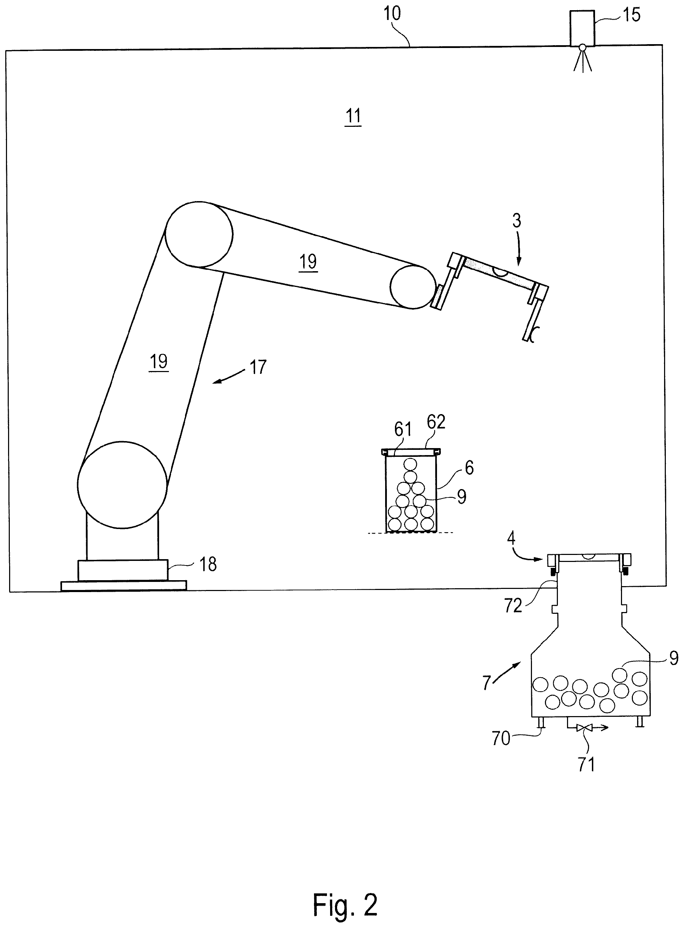

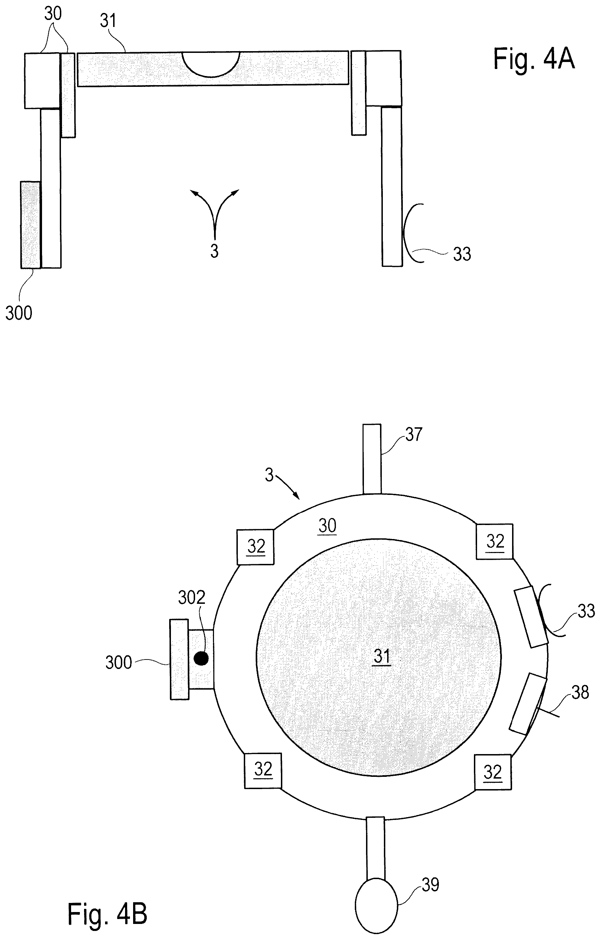

Figur 4A - den Werkzeugträger mit der permanenten Basisbestückung aus den Figuren 1 und 2, in vergrösserter Frontansicht;
Figur 4B - den Werkzeugträger gemäss Figur 4A mit permanenter erweiterter Bestückung, in vergrösserter Draufsicht;

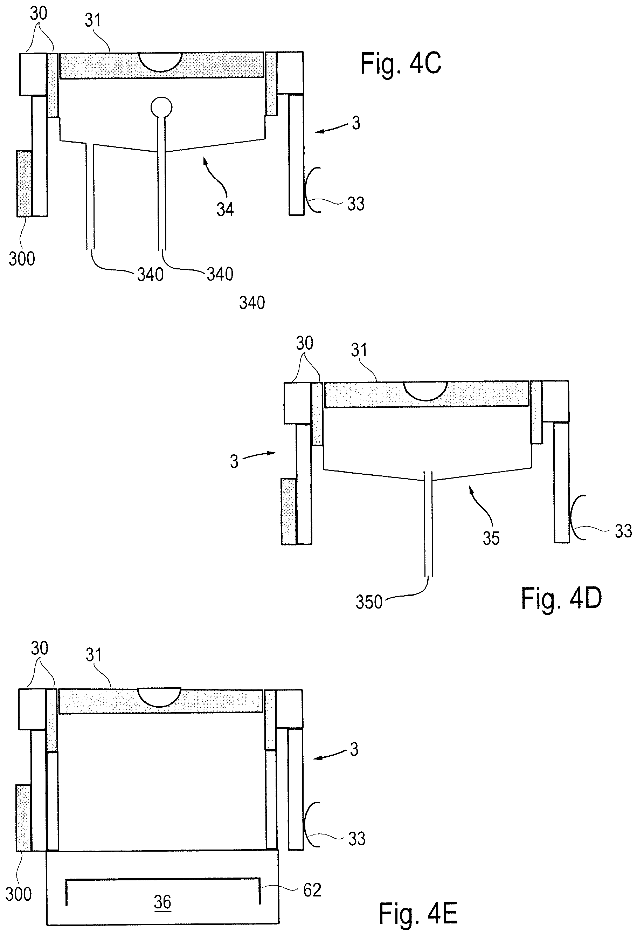

Figur 4C - den Werkzeugträger gemäss Figur 4A mit der Basisbestückung und dem temporär angesetzten Absaugwerkzeug;
Figur 4D - den Werkzeugträger gemäss Figur 4A mit der Basisbestückung und dem temporär angesetzten Reinigungswerkzeug;
Figur 4E - den Werkzeugträger gemäss Figur 4A mit der Basisbestückung und dem temporär angesetzten Bördelwerkzeug;

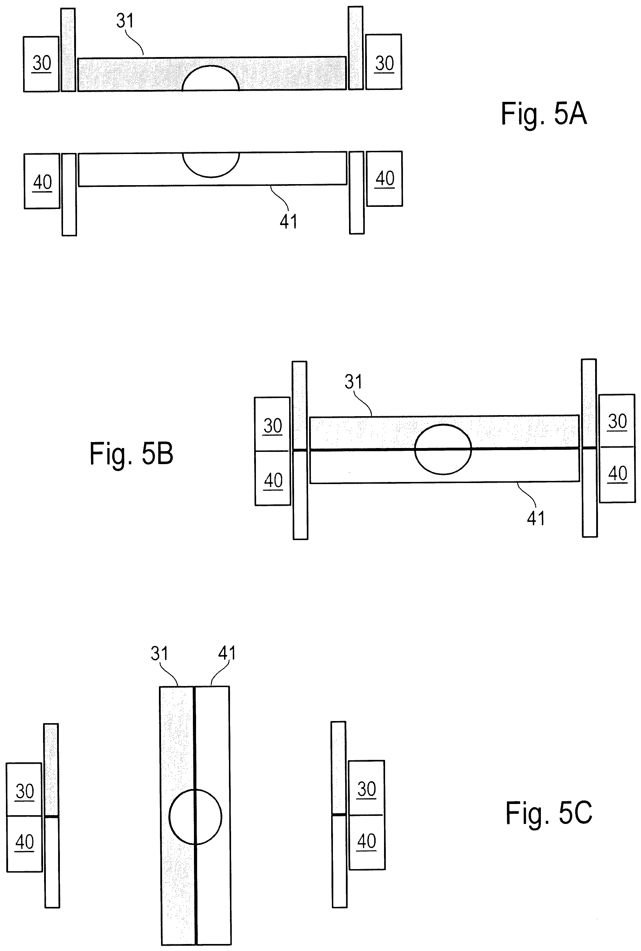

Figuren 5A bis 5C: Aufbau und Funktion der sich aus dem Werkzeugträger gemäss Figur 4A und aus dem Transferkopf des Sammelbehälters bzw. des Vorratsbehälters gemäss Figur 1 zusammensetzenden Doppelklappe, als Prinzipdarstellungen;
Figur 5A - Passivteil und angenähertes Aktivteil der Doppelklappe;
Figur 5B - Passivteil und Aktivteil der Doppelklappe gemäss Figur 5A, im Zusammenbau, in Absperrstellung;
Figur 5C - die Doppelklappe gemäss Figur 5B, in Offenstellung;

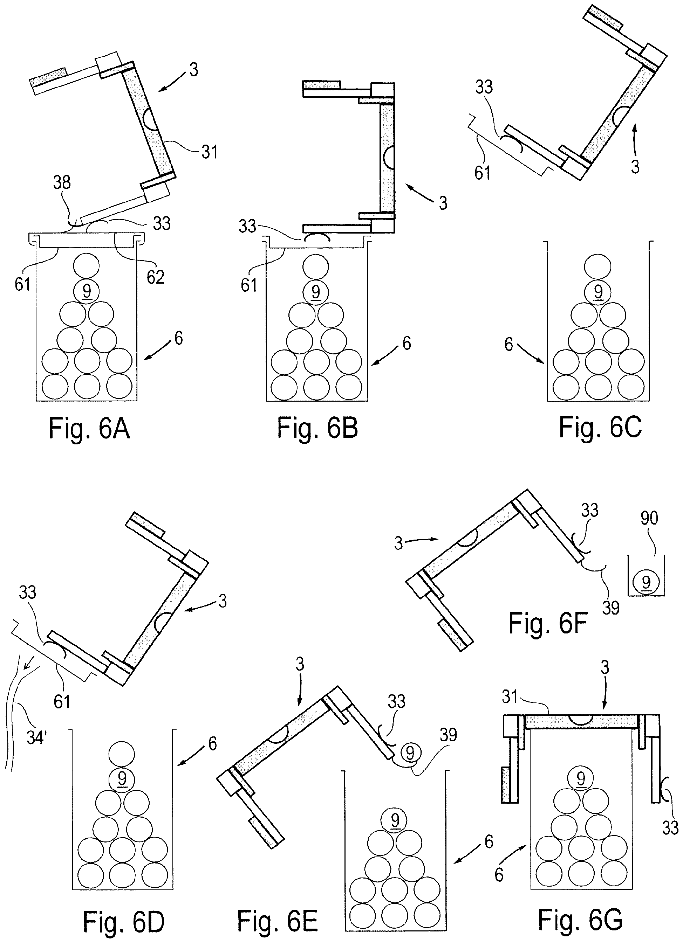

Figuren 6A bis 6R: den schrittweisen Umfüllprozess bei Entleerung eines Behälters mit einer Pulverfüllung in einen Sammelbehälter gemäss Figur 2;

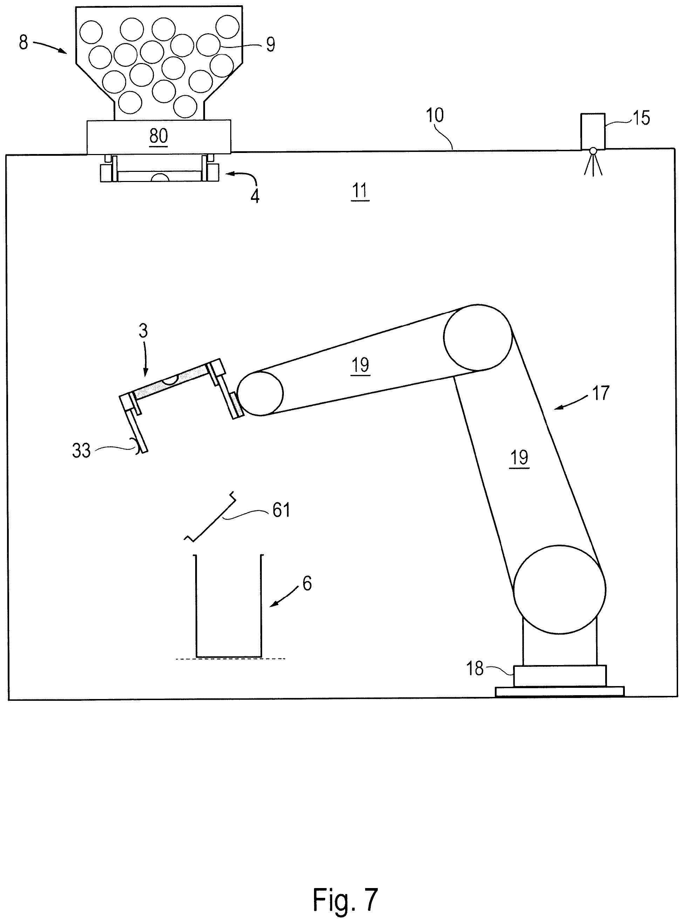

Figur 7 - die Anlage gemäss Figur 1 in der Anordnung zum Befüllen eines Behälters mit einer Pulverfüllung aus einem Vorratsbehälter;

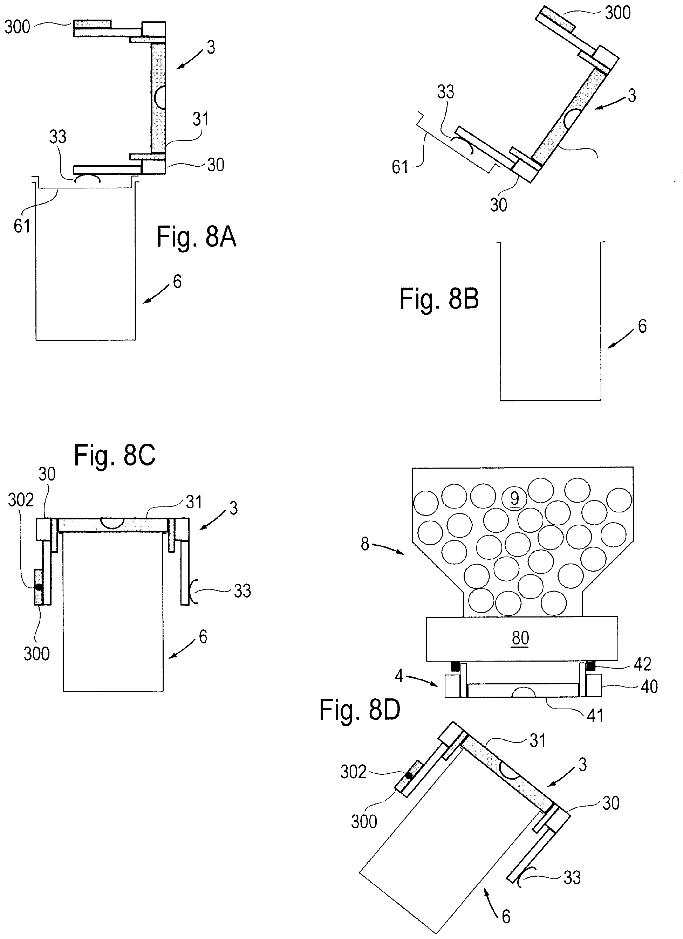

Figuren 8A bis 8M: den schrittweisen Prozess beim Befüllen eines Behälters mit einer Pulverfüllung aus einen Vorratsbehälter gemäss Figur 7;

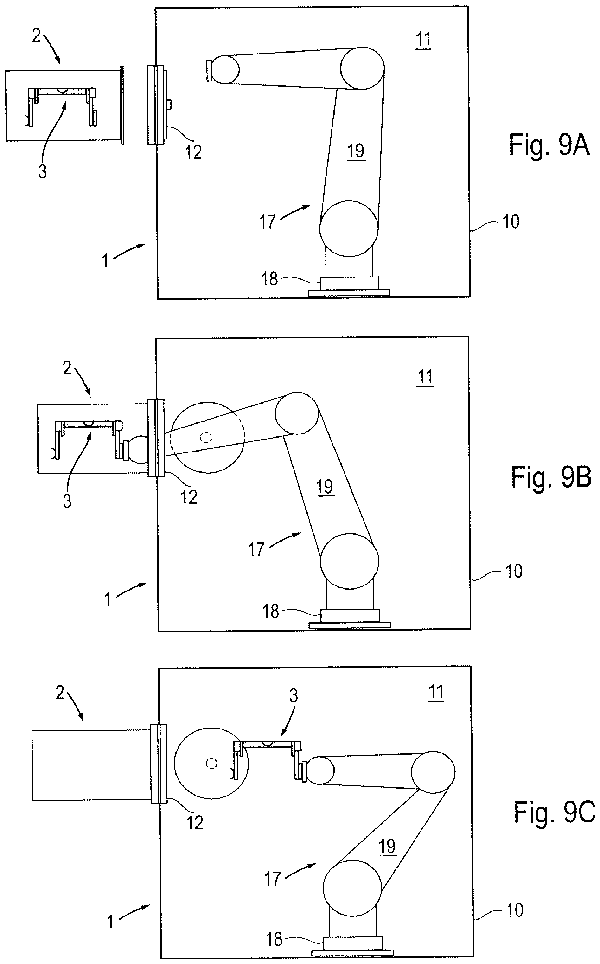

Figuren 9A bis 9C: den schrittweisen Prozess beim Einbringen eines sterilen Werkzeugträgers gemäss Figur 4A in das Containment, als Prinzipdarstellungen;

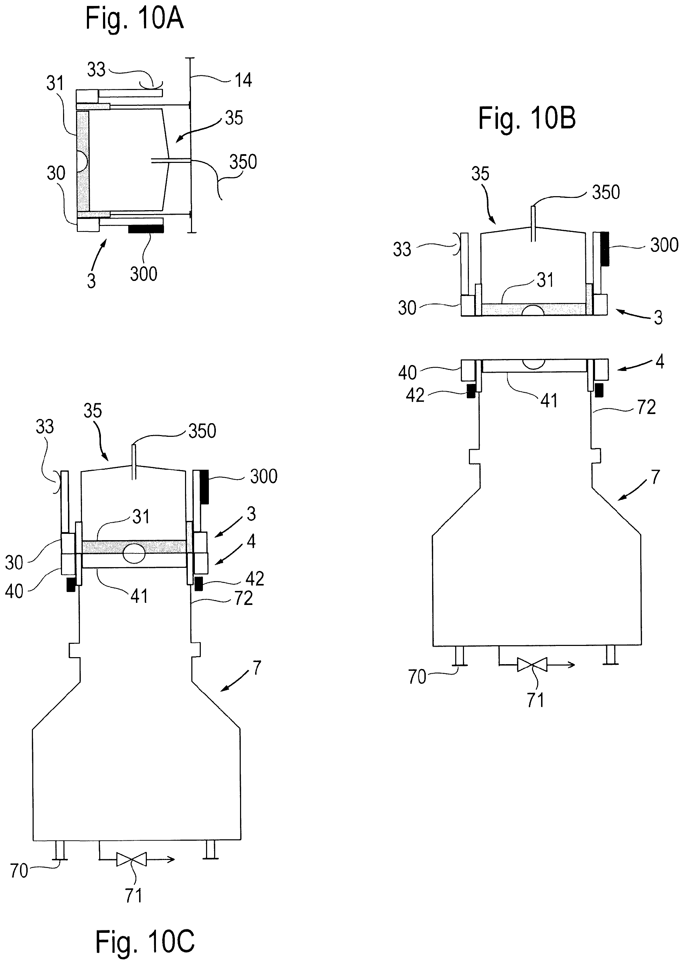

Figuren 10A bis 10G: den schrittweisen Prozess beim Sterilisieren von Werkzeugträger und Sammelbehälter, in einer ersten Variante, als Prinzipdarstellungen;

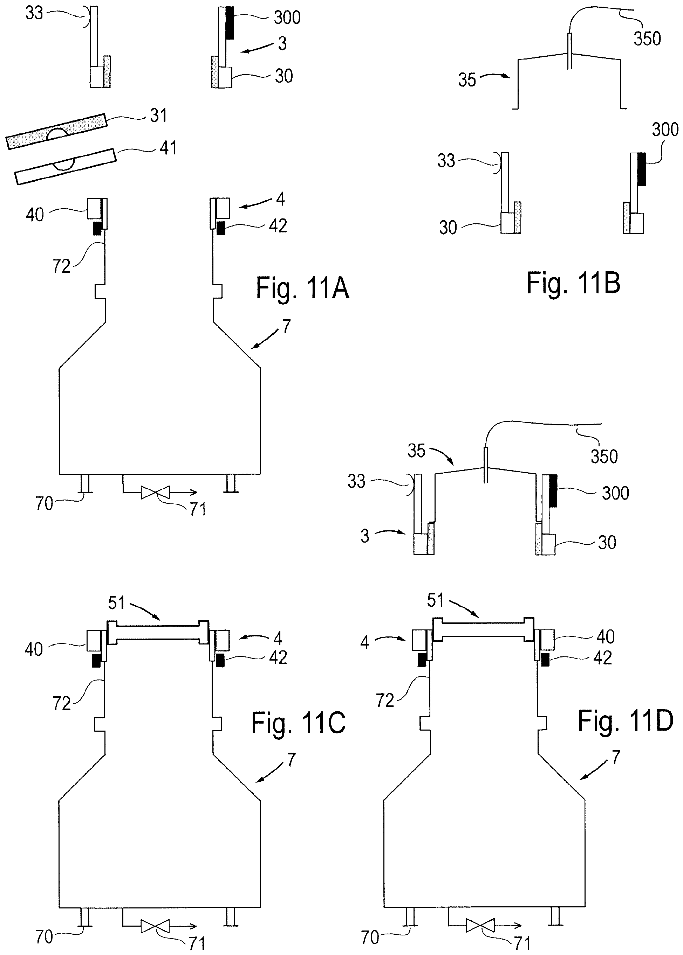

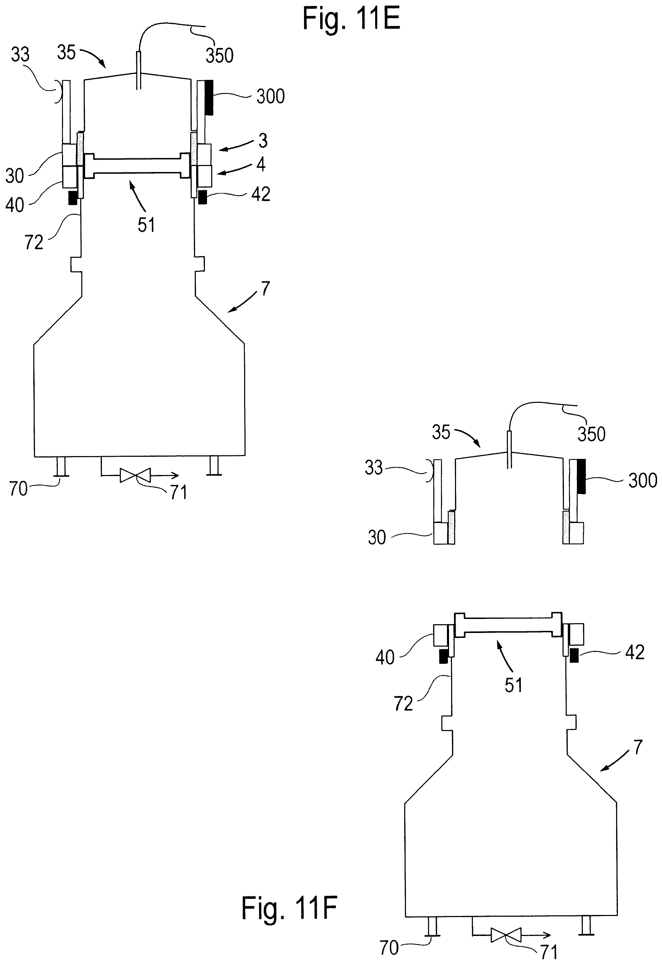

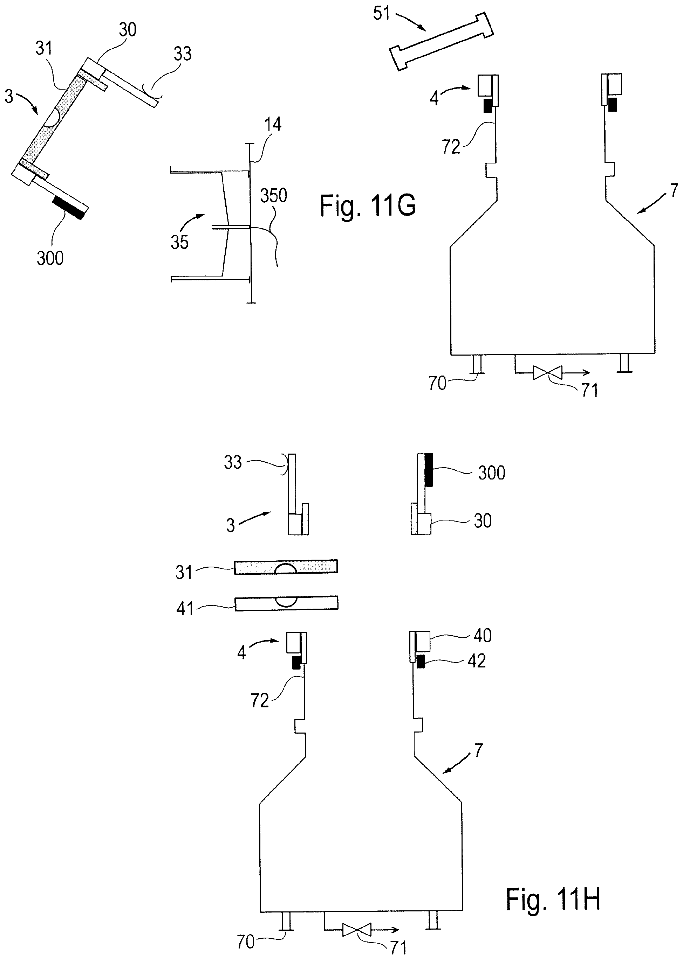

Figuren 11A bis 11H: den schrittweisen Prozess beim Sterilisieren von Werkzeugträger und Sammelbehälter, in einer zweiten Variante, als Prinzipdarstellungen;

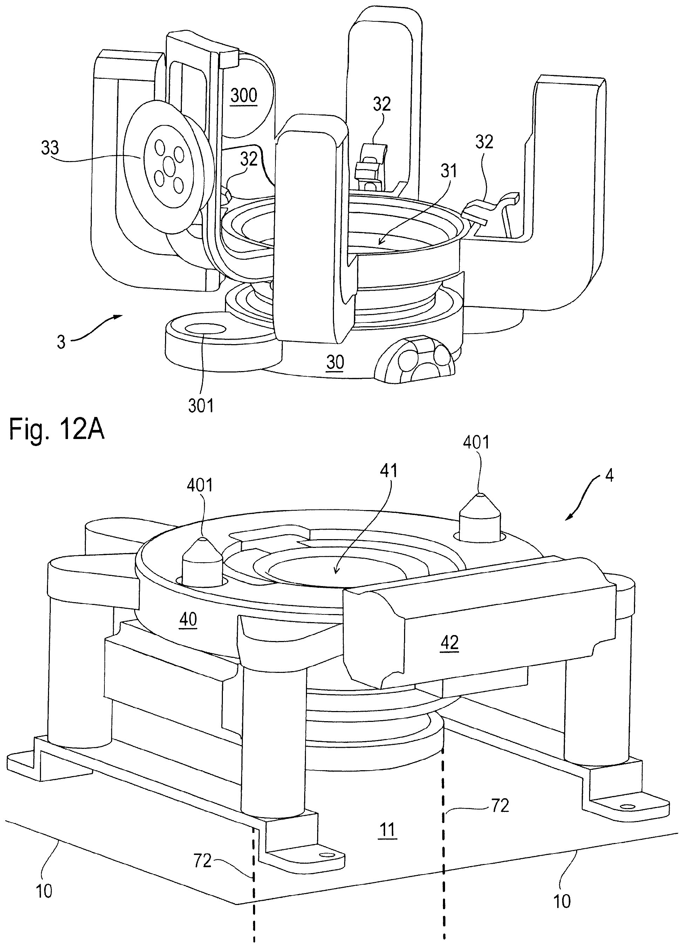

Figur 12A - aus Figur 1 den Transferkopf am Boden des Containments installiert und dazu den angenäherten Werkzeugträger, in Perspektivansicht;

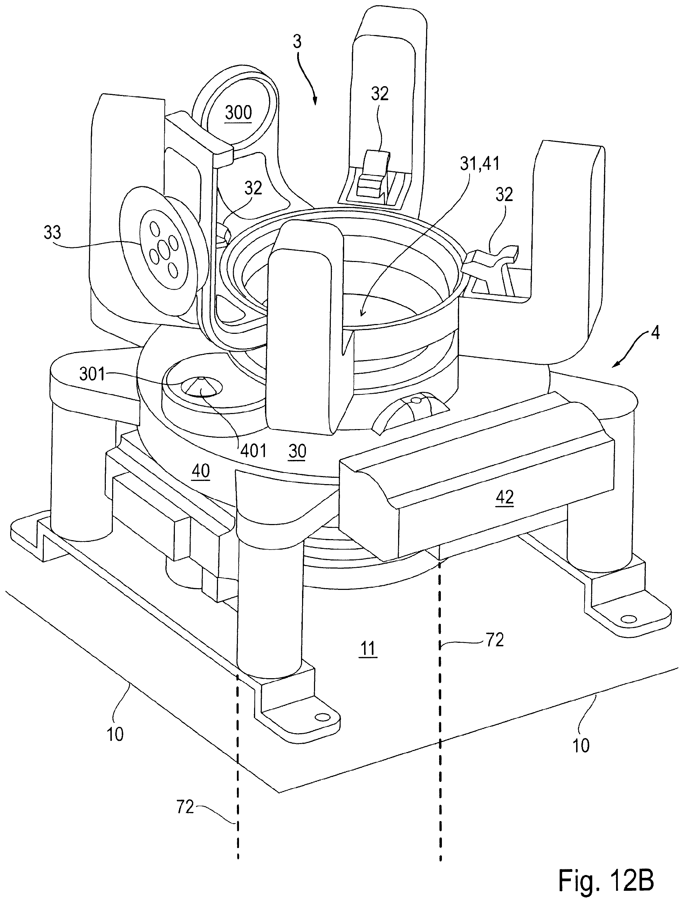

Figur 12B - die Anordnung gemäss Figur 12A, im Zusammenbau;

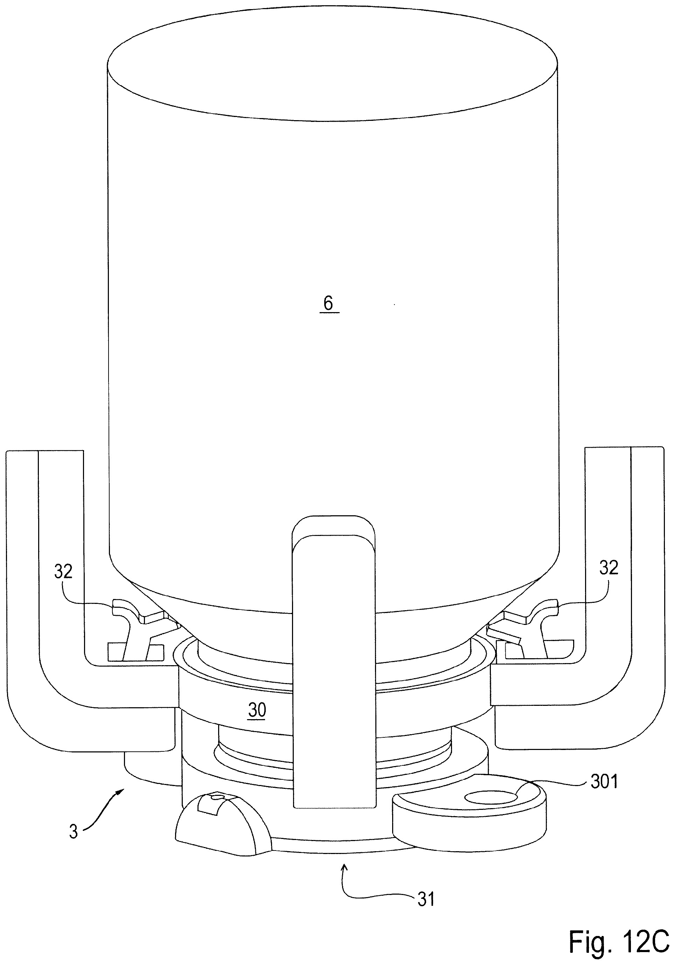

Figur 12C - den Werkzeugträger aus Figur 12A mit geklemmtem Behälter, wie in Figur 6G ersichtlich, kopfstehend; und

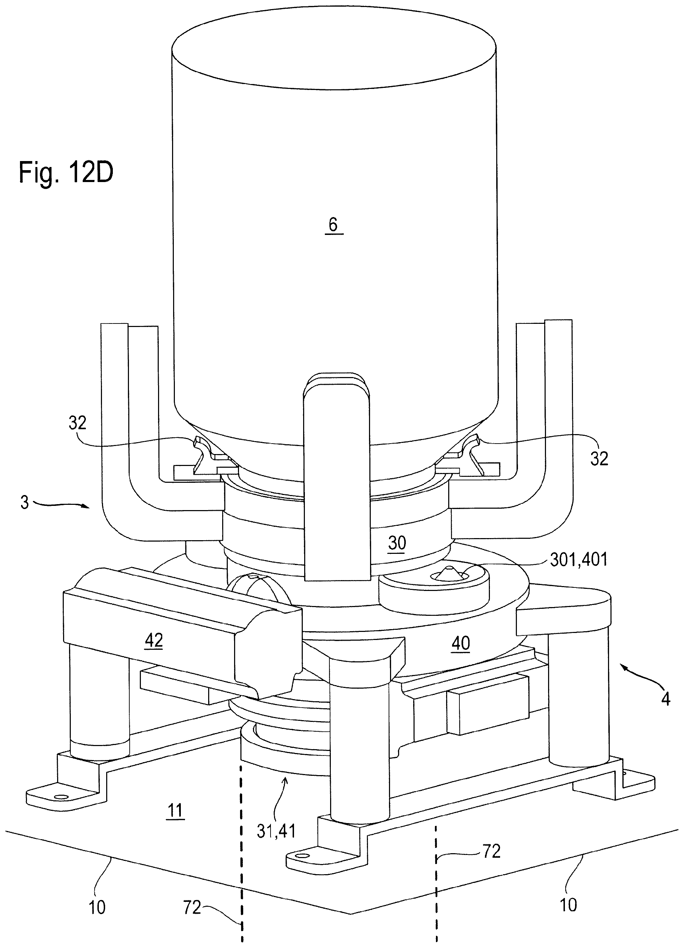

Figur 12D - die Anordnung gemäss Figur 12C, im Zusammenbau mit dem Transferkopf aus Figur 12A.

Mit Bezug auf die beiliegenden Zeichnungen erfolgt nachstehend die detaillierte Beschreibung der erfindungsgemässen Anlage mit einem Containment zum aseptischen Umfüllen eines Pulvers, nämlich zur Entleerung eines mit Pulver gefüllten Behälters in einen Sammelbehälter und/oder zum Befüllen eines Behälters mit

Pulver aus einem Vorratsbehälter.

Für die gesamte weitere Beschreibung gilt folgende Festlegung. Sind in einer Figur zum Zweck zeichnerischer Eindeutigkeit Bezugsziffern enthalten und dabei zeichnerisch eindeutig erkennbar ist, dass es sich um "wiederkehrende" Bauteile handelt, aber im unmittelbar zugehörigen Beschreibungstext nicht erläutert, so sei im Interesse der Verkürzung, auf deren Erklärung in vorangehenden Figurenbeschreibungen hingewiesen.

### Figuren 1 und 9A bis 9C

Die hier illustrierte Anlage mit einem Containment **1** zum aseptischen Umfüllen eines Pulvers **9,** nämlich entsprechend der Eignung der Anlage zur Entleerung eines mit Pulver **9** gefüllten Behälters **6** in einen Sammelbehälter **7** und/oder zum Befüllen eines Behälters **6** mit Pulver **9** aus einem Vorratsbehälter **8** bezweckt die Darstellung einer Übersicht der Erfindung. Das Containment **1** ist vom Gehäuse **10** umgeben und schliesst so die Arbeitskammer **11** ein, in der ein Roboter **17**hier als Knickarmroboter beschaffen - auf seinem Fundament **18** ruht und die Armanordnung **19** besitzt. In die Arbeitskammer **11** mündet eine Zuleitung **15** zum Eintrag von Dekontaminationsmittel, z.B. ein Sprühnebel einer H₂O₂-Lösung.

In der Arbeitskammer **11** steht derzeit ein mit Pulver **9** gefüllter Behälter **6,** der zur Entleerung vorgesehen ist und mit dem ersten Verschlusselement **61** - z.B. ein Deckel - und dem zweiten Verschlusselement **62** - in der Regel eine Bördelkappe - verschlossen ist. Dieser Behälter **6** wurde in dekontaminiertem Zustand aus einer fortlaufenden Anzahl mittels der Schleuse **23** durch den Schleusenport **13** in die Arbeitskammer **11** eingebracht. Alternativ können durch die Schleuse **23** und den Schleusenport **13,** leere, zu befüllende Behälter **6** kontinuierlich in die Arbeitskammer **11** gefördert werden.

Die Schleuse **23** ist auch zum Ausbringen von entleerten oder befüllten Behältern **6** aus der Arbeitskammer **11** sowie auch zum Ein- und Ausbringen von mit Pulver **9** gefüllten Behältern **6** in bzw. aus der Arbeitskammer **11** zwecks Entnahme einer Testmenge mit einem Probewerkzeug **39** (siehe Figuren 4B, 6F) zur Kontrolle der Eigenschaften des gehandhabten Pulvers **9** nutzbar. Alternativ kann man zum Ausbringen von entleerten oder befüllten Behältern **6** aus der Arbeitskammer **11** sowie auch zum Ein- und Ausbringen von mit Pulver **9** gefüllten Behältern **6** in bzw. aus der Arbeitskammer **11** zwecks Entnahme einer Testmenge mit dem Probewerkzeug **39** zur Kontrolle der Eigenschaften des gehandhabten Pulvers **9** am Containment **1** eine zweite Schleuse oder ein Mousehole vorsehen.

Der Sammelbehälter **7** ist zur Aufnahme des aus entleerten Behältern **6** stammenden Pulvers **9** bestimmt und besitzt einen aus der Arbeitskammer **11** zuführenden Einlass, auf dem ein in die Arbeitskammer **11** ragender Transferkopf **4** sitzt. Vom Transferkopf **4** zum Sammelbehälter **7** erstreckt sich das Kanalstück **72,** welche das Gehäuse **10** durchragt. Der mit Pulver **9** gefüllte Vorratsbehälter **8** ist zur Beschickung leerer Behälter **6** bestimmt und besitzt einen in die Arbeitskammer **11** abführenden Einlass, auf dem ebenfalls ein in die Arbeitskammer **11** ragender Transferkopf **4** sitzt. Zwischen Vorratsbehälter **8** und Transferkopf **4** ist die Dosiervorrichtung **80** zur Zuteilung der gewünschten Füllmenge an Pulver **9** angeordnet. Der zum Sammelbehälter **7** zugehörige Transferkopf **4** ist am Gehäuse **10** des Containments **1,** vorzugsweise an einem Bodenelement, verankert, und der zum Vorratsbehälter **8** zugehörige Transferkopf **4** ist ebenfalls am Gehäuse **10** des Containments **1,** vorzugsweise an einem Deckenelement, verankert. Der Sammelbehälter **7** ruht auf dem Fundament **70** und besitzt das Auslassventil **71** zur Druck- und Flüssigkeitsabfuhr bei der Reinigung und Dekontamination mittels des Spül- und Sterilisationswerkzeugs **35.**

Ein Absaugwerkzeug **34,** ein Spül- und Sterilisationswerkzeug **35** und ein Bördelwerkzeug **36** sind innerhalb der Arbeitskammer **11** lösbar an einer Parkstation **14** zur Anwendung für den Zugriff mit dem an der Armanordnung **19** des Roboters **17** zu installierenden Werkzeugträgers **3** deponiert. Das Absaugwerkzeug **34** dient dazu, innerhalb der Arbeitskammer **11** den Werkzeugträger **3** und erste Verschlusselemente **61** zu reinigen (siehe Figur 4C). Das Spül- und Sterilisationswerkzeug **35** dient dazu, innerhalb der Arbeitskammer **11** den Sammelbehälter **7,** einschliesslich das Passivteil **31** und das Aktivteil **41** der Doppelklappe zu reinigen und zu sterilisieren (siehe Figuren 10A-10G). Das Bördelwerkzeug **36** dient dazu, innerhalb der Arbeitskammer **11** am Behälter **6** zweite Verschlusselemente **62** anzubringen.

Zum Einbringen des Werkzeugträgers **3** in die Arbeitskammer **11,** in steriler Beschaffenheit, ist der hermetisch ummantelte Transferbehälter **2** vorgesehen, und das Gehäuse **10** weist den Transferport **12** auf. Der Transferbehälter **2** ist zur Aufnahme des Werkzeugträgers **3** und zum Andocken an den Transferport **12** bestimmt. Im Zustand des an den Transferport **12** angedockten Transferbehälters **2,** bei geöffnetem Transferport **12** und Transferbehälter **2,** lässt sich der Werkzeugträger **3** mit dem zugreifenden Roboter **17** aus dem Transferbehälter **2** in die Arbeitskammer **11** ziehen.

### Figur 2

Hier ist die Anlage gemäss Figur 1 auf die Funktion zur Entleerung eines voll mit Pulver **9** gefüllten Behälters **6** in einen das zu entleerende Pulver **9** aufzunehmenden Sammelbehälter **7** reduziert. Die Armanordnung **19** des Roboters **17** ist mit einem Werkzeugträger **3** verbunden.

### Figuren 3A und 3B

Ein zu entleerende Behälter **6** enthält das Pulver **9** und ist zumindest mit den ersten Verschlusselement **61** versehen, eventuell auch mit dem darüber angebrachten zweiten Verschlusselement **62.** Ein aufgefüllter Behälter **6** hingegen wird zumeist nur mit dem ersten Verschlusselement **61** verschlossen sein. Auf dem Einlass des Sammelbehälters **7** ist der Transferkopf **4** installiert, welcher die Basis **40** und das Aktivteil **41** der Doppelklappe besitzt, die durch den Antrieb **42** verstellbar ist.

### Figuren 4A bis 4E

Diese Figurenfolge illustriert den Werkzeugträger **3** mit verschiedener Bestückung. Der Werkzeugträger **3** hat an seiner Basis **30** zumindest die Klemmelemente **32** zum Ergreifen des Behälters **6,** einen Vakuumheber **33** zum Ergreifen des ersten Verschlusselements **61** sowie das Passivteil **31** der Doppelklappe.

Zur Verbindung mit der Armanordnung **19** besitzt die Basis **30** des Werkzeugträgers **3** einen Anschlussflansch **300,** wobei im Anschlussflansch **300** eine Wiegezelle **302** sitzen kann. Die Basis **30** weist Positionierorgane **301** auf, die zur form- und kraftschlüssigen Verbindung mit komplementären Arretierorganen **401,** welche sich an einer Basis **40** des Transferkopfes **4** befinden, bestimmt sind und den druckdichten Zusammenbau zwischen Werkzeugträger 3 und Transferkopf **4** gewährleisten (siehe 12A bis 12D).

Die Basis **30** des Werkzeugträgers **3** ist zur temporären Aufnahme für ein Absaugwerkzeug **34** oder ein Spül- und Sterilisationswerkzeug **35** oder ein Bördelwerkzeug **36** ausgestattet. Zur Fixierung der Werkzeuge **34,35,36** an der Basis **30** des Werkzeugträgers **3** dienen allein oder zusätzlich die Klemmelemente **32.** In das Absaugwerkzeug **34** führen die Leitungen **340,** und in das Spül- und Sterilisationswerkzeug **35** die Leitung **350.**

Der Werkzeugträger **3** weist in der Komplettausstattung zusätzlich auf:
- einen Vibrator **37** zum Lösen eines Restes von Pulver **(9** aus einem zu entleerenden Behälter **6;**
- einen Reisshaken **38** zur Entfernung eines eventuell an einem zu entleerenden Behälter **6** vorhandenen zweiten Verschlusselements **62;** und
- ein Probewerkzeug **39** zur Entnahme einer Probe vom Pulver **9** zu Kontrollzwecken.

### Figuren 5A bis 5C

Diese Figurenfolge illustriert den Aufbau und die Funktion der Doppelklappe, welche sich aus dem Passivteil **31** vom Werkzeugträger **3** und aus dem Aktivteil **41** vom Transferkopf **4** zusammensetzt. Passivteil **31** und Aktivteil **41** sind jeweils in der Basis **30** des Werkzeugträgers **3** bzw. in der Basis **40** des Transferkopfes **4** integriert. Passivteil **31** und Aktivteil **41** zusammen werden vom Antrieb **42** am Transferkopf **4** aus der Schliessposition in die Offenstellung, bzw. umgekehrt, bewegt.

### Figuren 6A bis 6R

Diese Figurenfolge zeigt schrittweisen Umfüllprozess bei Entleerung eines mit Pulver **9** gefüllten Behälters **6** in einen Sammelbehälter **7.**
- Figur 6A:: Mit dem am Werkzeugträger **3** vorhandenen dornartigen Reisshaken **38** wird das zweite Verschlusselement **62** vom mit Pulver **9** gefüllten Behälter **6** erfasst und entfernt.
- Figur 6B:: Mit dem am Werkzeugträger **3** vorhandenen Vakuumheber **33** wird das erste Verschlusselement **61** erfasst.
- Figur 6C:: Mit dem am Werkzeugträger **3** vorhandenen Vakuumheber **33** wird das erste Verschlusselement **61** entfernt.
- Figur 6D:: Mit einem zusätzlichen Absaugwerkzeug **34'** wird vom ersten Verschlusselement **61** eventuell haften gebliebenes Pulver **9** abgesaugt.
- Figur 6E:: Mit dem am Werkzeugträger **3** vorhandenen Probewerkzeug **39** wird eine Probe des Pulvers **9** entnommen.
- Figur 6F:: Die entnommene Probe des Pulvers **9** wird zur Kontrolle in ein Probegefäss **90** gegeben.
- Figur 6G:: Auf den Behälter **6** wird der Werkzeugträger **3** aufgesetzt.

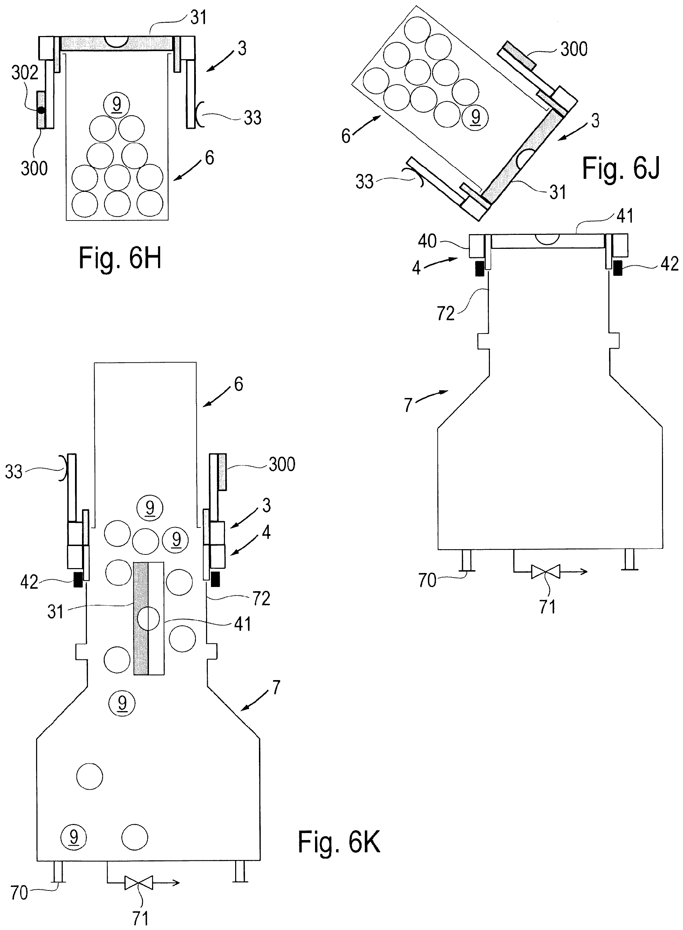

- Figur 6H:: Mittels der Wägezelle **302** im Anschlussflansch **300** wird das Gesamtgewicht ermittelt.
- Figur 6J:: Zur Entleerung des Behälters **6** wird dieser kopfstehend mit dem Transferkopf **4** auf dem Sammelbehälter **7** verbunden.
- Figur 6K:: Per Antrieb **42** wird die Doppelklappe **31,41** in Offenstellung bewegt, das Pulver **9** fliesst durch das Kanalstück **72** in den Sammelbehälter **7.**

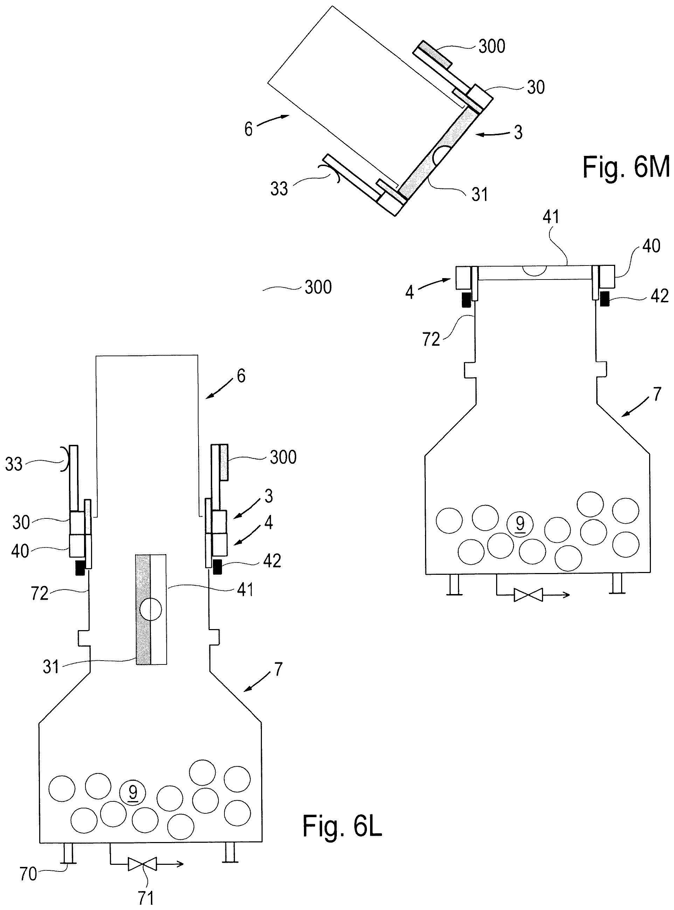

- Figur 6L:: Die Entleerung ist vollendet; der Behälter **6** ist leer, alles Pulver **9** ist in den Sammelbehälter **7** geflossen. Durch Aktivierung des Vibrators **7** (siehe Figur 4B) wird eventuell im Behälter **6** verbliebener Rest an Pulver 9 gelöst.
- Figur 6M:: Der leere Behälter **6** mit dem Werkzeugträger **3** werden vom Transferkopf **4** des Sammelbehälters **7** getrennt.

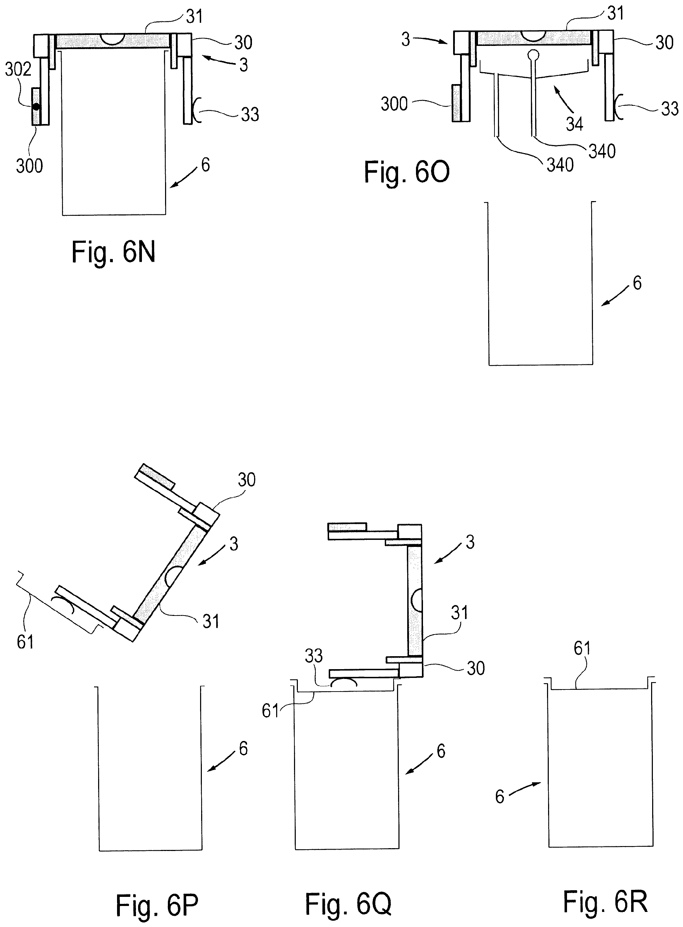

- Figur 6N:: Der Werkzeugträger **3** wird auf den leeren Behälter **6** aufgesetzt. Mittels der Wägezelle **302** im Anschlussflansch **300** wird das Leergewicht ermittelt.
- Figur 6O:: Mit dem in den Werkzeugträger **3** eingeführten Absaugwerkzeug **34** wird der Werkzeugträger **3,** insbesondere die Innenseite des Passivteils **31** der Doppelklappe, gereinigt.
- Figur 6P:: Der Werkzeugträger **3** erfasst mit seinem Vakuumheber **33** ein erstes Verschlusselement **61.**
- Figur 6Q:: Das erste Verschlusselement **61** wird auf den leeren Behälter **6** aufgesetzt.
- Figur 6R:: Der Entleerprozess ist komplett beendet; ein leerer und mit ersten Verschlusselement **61** verschlossener Behälter **6** steht zum Abtransport bereit.

### Figur 7

Hier ist die Anlage gemäss Figur 1 auf die Funktion zur Befüllung eines leeren Behälters **6** mit Pulver **9** aus dem Vorratsbehälter **8** reduziert. Der Behälter **6** ist offen gezeigt; das erste Verschlusselement **61** ist abgehoben.

### Figuren 8A bis 8M

Diese Figurenfolge zeigt schrittweisen Umfüllprozess bei Befüllung eines leeren Behälters **6** mit Pulver **9** aus einem Vorratsbehälter **8.**
- Figur 8A:: Mit dem am Werkzeugträger **3** vorhandenen Vakuumheber **33** wird das erste Verschlusselement **61** vom leeren Behälter **6** erfasst.
- Figur 8B:: Das erste Verschlusselement **61** ist abgehoben.
- Figur 8C:: Der Werkzeugträger **3** wird auf den offenen Behälter **6** aufgesetzt und mittels der Wägezelle **302** im Anschlussflansch **300** wird das Leergewicht ermittelt.
- Figur 8D:: Behälter **6** mit aufsitzendem Werkzeugträger **3** werden dem Transferkopf **4** des Vorratsbehälters **8** angenähert.

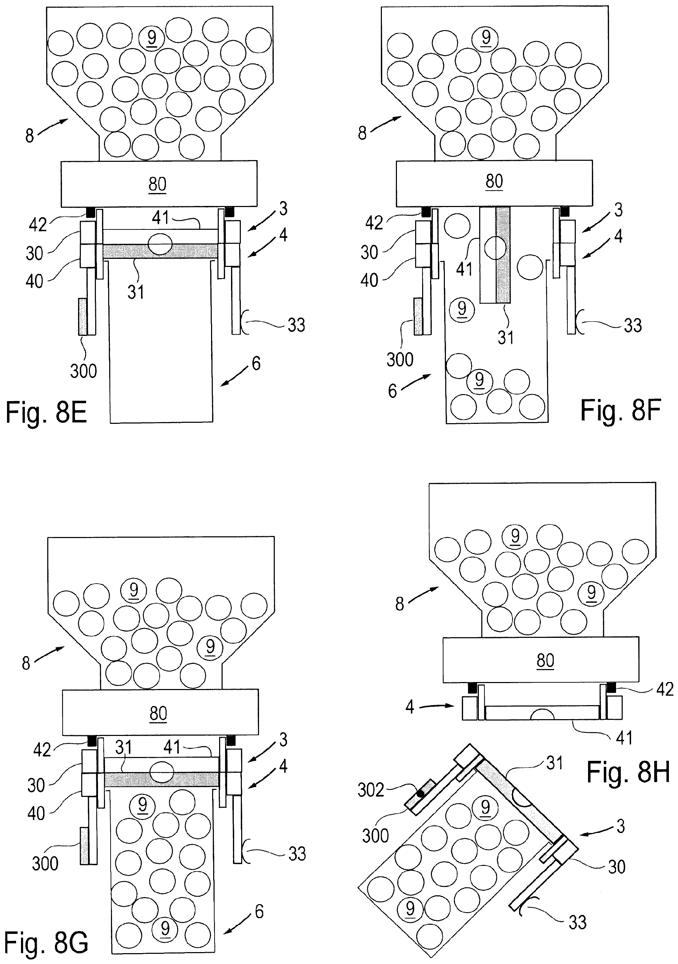

- Figur 8E:: Behälter **6** mit aufsitzendem Werkzeugträger **3** sind am Transferkopf **4** des Vorratsbehälters **8** angedockt.
- Figur 8F:: Per Antrieb **42** wird die Doppelklappe **31,41** in Offenstellung bewegt, das Pulver **9** fliesst aus der Dosiervorrichtung **80** in den Behälter **6.**
- Figur 8G:: Die Füllung des Behälters **6** ist erfolgt; die Doppelklappe **31,41** wird vom Antrieb **42** in die Schliessposition bewegt.
- Figur 8H:: Der gefüllte Behälter **6** mit dem aufsitzenden Transferkopf **4** werden vom Transferkopf am Vorratsbehälter **8** abgedockt. Mittels der Wägezelle **302** im Anschlussflansch **300** wird das Gesamtgewicht ermittelt.

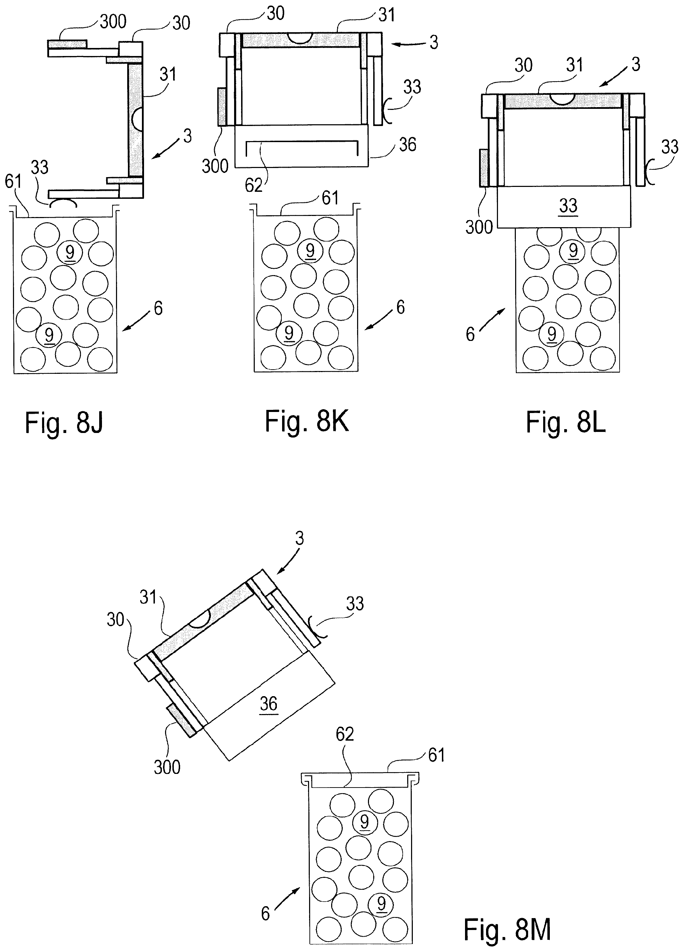

- Figur 8J:: Mit dem am Werkzeugträger **3** vorhandenen Vakuumheber **33** wird das erste Verschlusselement **61** erfasst und auf den gefüllten Behälter **6** aufgesetzt.
- Figur 8K:: Mit dem am Werkzeugträger **3** angedockten Bördelwerkzeug **36** wird das zweite Verschlusselement **62** bereitgestellt.
- Figur 8L:: Das Bördelwerkzeug **36** ist auf den gefüllten Behälter **6** aufgesetzt.
- Figur 8M:: Das zweite Verschlusselement **62** ist am gefüllten Behälter **6** über dem ersten Verschlusselement **61** angebracht. Der Füllprozess ist komplett beendet; der sicher verschlossene Behälter **6** steht zum Abtransport bereit.

### Figuren 10A bis 10G

Diese Figurenfolge zeigt den schrittweisen Prozess beim Sterilisieren von Werkzeugträger **3** und Sammelbehälter **7,** in einer ersten Variante.
- Figur 10A:: Mit dem am Werkzeugträger **3** wird das Spül- und Sterilisationswerkzeug **35** erfasst.
- Figur 10B:: Die Anordnung aus Werkzeugträger **3** und Spül- und Sterilisationswerkzeug **35** wird dem Transferkopf **4** des Sammelbehälters **7** angenähert.
- Figur 10C:: Der Werkzeugträger **3** ist mit dem Transferkopf **4** des Sammelbehälters **7** verbunden; die Doppelklappe **31,41** steht in Schliessposition.

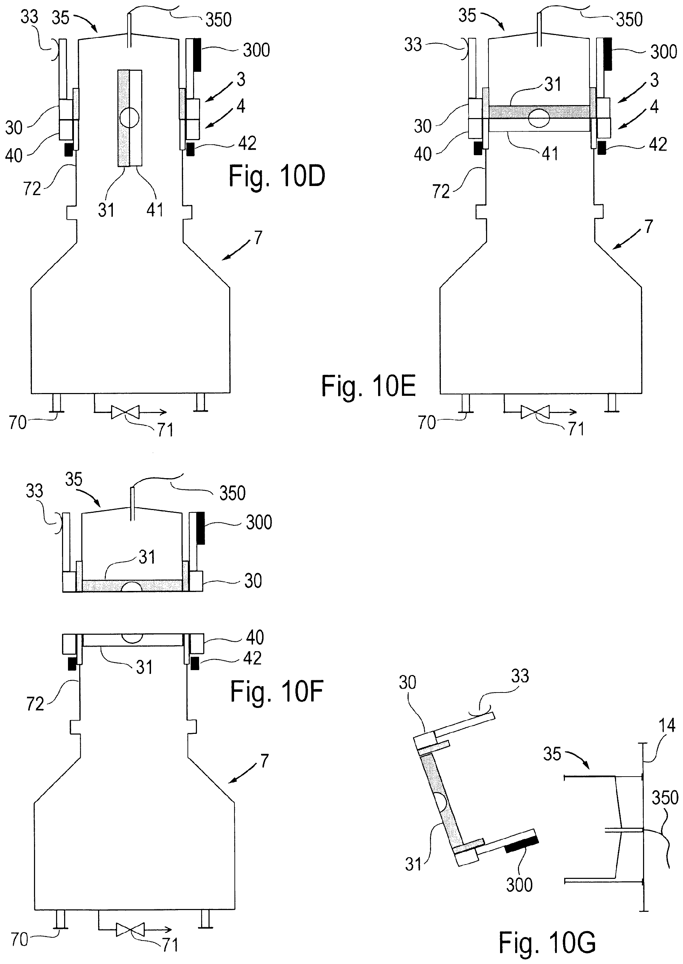

- Figur 10D:: Die Doppelklappe **31,41** wird geöffnet und die Spülung und Sterilisation von Doppelklappe **31,41** und Sammelbehälter **7** erfolgen.
- Figur 10E:: Spülung und Sterilisation sind erledigt, die Doppelklappe **31,41** wird geschlossen.
- Figur 10F:: Der Werkzeugträger **3** mit dem Spül- und Sterilisationswerkzeug **35** werden vom Transferkopf **4** des Sammelbehälters **7** abgehoben.
- Figur 10G:: Das am Werkzeugträger **3** hängende Spül- und Sterilisationswerkzeug **35** ist an die Parkstation **14** zurückgebracht.

### Figuren 11A bis 11H

Diese Figurenfolge zeigt den schrittweisen Prozess beim Sterilisieren von Werkzeugträger **3** und Sammelbehälter **7,** in einer zweiten Variante. Wiederum wird mit dem Werkzeugträger **3** das Spül- und Sterilisationswerkzeug **35** zum Einsatz gebracht, aber es müssen nun die beiden Teile **31,41** der Doppelklappe ausgebaut und durch ein Pseudoteil **51** ersetzt werden.

### Figuren 12A und 12B

Der Transferkopf **4** ist am Gehäuse **10** des Containments **1,** vorzugsweise am Boden, installiert und der Werkzeugträger **3** von oben angenähert. Die Positionierorgane **301** am Werkzeugträger **3** werden zu den Arretierorganen **401** zum Zusammenfügen aufeinander ausgerichtet. Von Ausgang des Transferkopfes **4** erstreckt sich ein Kanalstück **72** aus dem Containment **1** in den Sammelbehälter **7** (siehe Figur 1). Im zusammengebauten Zustand von Werkzeugträger **3** und Transferkopf **4** sind die Positionierorgane **301** mit den Arretierorganen **401** fest verriegelt, so dass Werkzeugträger **3** und Transferkopf **4** druckdicht miteinander verbunden sind.

### Figuren 12C und 12D

Beim Aufsetzen des kopfstehenden Behälters **6** auf den Werkzeugträger **3** bzw. beim Abheben davon sind die Klemmelemente **32** des Werkzeugträgers **3** in gelöster Stellung (siehe Figur 12C), beim Umfüllprozess hingegen in Klemmstellung (siehe Figur 12D).

## Patentansprüche

1. Anlage mit einem Containment **(1)** zum aseptischen Umfüllen eines Pulvers **(9),** nämlich zur Entleerung eines mit Pulver **(9)** gefüllten Behälters **(6)** in einen Sammelbehälter **(7)** und/oder zum Befüllen eines Behälters **(6)** mit Pulver **(9)** aus einem Vorratsbehälter **(8),** wobei:
a) das Containment **(1)** eine von einem Gehäuse (**10**) umgebene Arbeitskammer (**11**) aufweist;
b) im Containment (**1**) ein Roboter (17) installiert ist, der eine über einen Schwenkbereich bewegliche Armanordnung (19) besitzt;
c) bei Vorhandensein eines Sammelbehälters **(7)** dieser einen aus der Arbeitskammer **(11)** zuführenden Einlass und bei Vorhandensein eines Vorratsbehälters **(8)** dieser einen in die Arbeitskammer **(11)** abführenden Auslass hat; und
d) der Behälter **(6)** zumindest mit einen ersten Verschlusselement **(61)** verschliessbar ist, **dadurch gekennzeichnet, dass**
e) die Armanordnung (19) mit einem Werkzeugträger **(3)** verbunden ist, der an seiner Basis **(30)** zumindest mit Klemmelementen **(32)** zum Ergreifen des Behälters **(6),** einem Vakuumheber **(33)** zum Ergreifen des ersten Verschlusselements **(61)** sowie einem Passivteil **(31)** einer Doppelklappe ausgestattet ist;
f) am Einlass in den Sammelbehälter **(7)** und/oder am Auslass des Vorratsbehälters **(8)** ein Transferkopf **(4)** montiert ist, die jeweils in die Arbeitskammer **(11)** hineinragen; und
g) das Passivteil **(31)** zusammen mit einem im Transferkopf **(4)** enthaltenen Aktivteil **(41)** die Doppelklappe bildet.

2. Anlage nach Anspruche 1, **dadurch gekennzeichnet, dass**
a) die Basis **(30)** des Werkzeugträgers (3) einen Anschlussflansch **(300)** zur Verbindung mit der Armanordnung **(19)** besitzt, wobei im Anschlussflansch **(300)** eine Wiegezelle **(302)** sitzen kann; und
b) die Basis **(30)** Positionierorgane **(301)** aufweist, die zur form- und kraftschlüssigen Verbindung mit komplementären Arretierorganen **(401),** welche sich an einer Basis **(40)** des Transferkopfes **(4)** befinden, bestimmt sind und den druckdichten Zusammenbau zwischen Werkzeugträger **(3)** und Transferkopf **(4)** gewährleisten.

3. Anlage nach zumindest einem der Ansprüche 1 und 2, **dadurch gekennzeichnet, dass**
a) die Basis **(30)** des Werkzeugträgers **(3)** zur temporären Aufnahme für ein Absaugwerkzeug **(34)** oder ein Spül- und Sterilisationswerkzeug **(35)** oder ein Bördelwerkzeug **(36)** ausgestattet ist;
b) zur Fixierung der Werkzeuge **(34,35,36)** an der Basis **(30)** des Werkzeugträgers **(3)** allein oder zusätzlich die Klemmelemente **(32)** dienen;
c) das Absaugwerkzeug **(34)** innerhalb der Arbeitskammer **(11)** zur Reinigung des Werkzeugträgers **(3)** und von ersten Verschlusselementen **(61)** dient;
d) das Spül- und Sterilisationswerkzeug **(35)** innerhalb der Arbeitskammer **(11)** zur Reinigung und Sterilisation des Sammelbehälters **(7),** einschliesslich des Passivteils **(31)** und des Aktivteils **(41)** der Doppelklappe, dient; und
e) das Bördelwerkzeug **(36)** innerhalb der Arbeitskammer **(11)** zum Anbringen eines zweiten Verschlusselements **(62)** am Behälter **(6)** dient.

4. Anlage nach Anspruch 3, **dadurch gekennzeichnet, dass** die Werkzeuge **(34,35,36)** innerhalb der Arbeitskammer **(11)** lösbar an einer Parkstation **(14)** zur Anwendung für den Zugriff mit dem an der Armanordnung **(19)** des Roboters **(17)** installierten Werkzeugträgers **(3)** deponiert sind.

5. Anlage nach zumindest einem der Ansprüche 1 bis 4, **dadurch gekennzeichnet, dass** der Werkzeugträger (3) in der Komplettausstattung auch aufweist:
a) einen Vibrator **(37)** zum Lösen eines Restes von Pulver **(9)** aus einem zu entleerenden Behälter **(6);**
b) einen Reisshaken **(38)** zur Entfernung eines eventuell an einem zu entleerenden Behälter **(6)** vorhandenen zweiten Verschlusselements **(62);** und
c) ein Probewerkzeug **(39)** zur Entnahme einer Probe vom Pulver **(9)** zu Kontrollzwecken.

6. Anlage nach den Ansprüchen 1 und 3, **dadurch gekennzeichnet, dass**
a) das erste Verschlusselement **(61)** als ein auf die Mündung des Behälters **(6)** aufgesetzter Deckel oder als ein in die Mündung des Behälters **(6)** eingesetzter Stopfen ausgebildet ist; und
b) das zweite Verschlusselement **(62)** als am Behälter **(6),** über dem ersten Verschlusselement **(61)** angebrachte Bördelkappe beschaffen ist.

7. Anlage nach zumindest einem der Ansprüche 1 bis 6, **dadurch gekennzeichnet, dass**
a) zum Einbringen des Werkzeugträgers **(3)** in die Arbeitskammer **(11),** in steriler Beschaffenheit, ein hermetisch ummantelter Transferbehälter **(2)** vorgesehen ist und das Gehäuse (**10**) einen Transferport **(12)** aufweist;
b) der Transferbehälter **(2)** zur Aufnahme des Werkzeugträgers **(3)** und zum Andocken an den Transferport **(12)** bestimmt ist; und
c) im Zustand des an den Transferport **(12)** angedockten Transferbehälters **(2),** bei geöffnetem Transferport **(12)** und Transferbehälter **(2),** sich der Werkzeugträger **(3)** mit dem zugreifenden Roboter **(17)** aus dem Transferbehälter **(2)** in die Arbeitskammer **(11)** ziehen lässt.

8. Anlage nach zumindest einem der Ansprüche 1 bis 7, **dadurch gekennzeichnet, dass**
a) zum Einbringen von zu entleerenden oder zu befüllenden Behältern **(6)** in die Arbeitskammer **(11),** in dekontaminierter Beschaffenheit, eine hermetisch ummantelte Schleuse **(23)** vorgesehen ist und das Gehäuse **(10)** einen Schleusenport **(13)** aufweist;
b) die Schleuse **(23)** zur Aufnahme von Behältern **(6)** und zum Andocken an den Schleusenport **(13)** bestimmt ist; und
c) im Zustand der an den Schleusenport **(13)** angedockten Schleuse **(23),** bei geöffnetem Schleusenport **(13)** und Schleuse **(23),** sich die Behälter (6) mit dem zugreifenden Roboter **(17)** aus der Schleuse **(23)** in die Arbeitskammer **(11)** ziehen lassen oder mittels einer Fördereinrichtung in die Arbeitskammer **(11)** gelangen.

9. Anlage nach zumindest einem der Ansprüche 2 bis 8, **dadurch gekennzeichnet, dass** die im Anschlussflansch **(300)** sitzende Wiegezelle **(302)** einer vergleichenden Gewichtsermittlung dient, nämlich:
a) im Prozess der Entleerung eines mit Pulver **(9)** gefüllten Behälters **(6)** in den Sammelbehälter **(7),** zwischen dem in der Ausgangssituation mit Pulver **(9)** gefülltem Behälter **(6)** und dem entleerten Behälter **(6);** oder
b) im Prozess des Befüllens eines leeren Behälters **(6)** mit Pulver **(9)** aus dem Vorratsbehälter **(8),** zwischen dem in der Ausgangssituation leeren Behälter **(6)** und dem mit Pulver **(9)** gefüllten Behälter **(6).**

10. Anlage nach zumindest einem der Ansprüche 5,7 bis 9 (die letzteren abhängig von 5), **dadurch gekennzeichnet, dass**
a) das zur Entnahme einer Probe vom Pulver **(9)** zu Kontrollzwecken vorgesehene Probewerkzeug **(39)** im Prozess der Entleerung eines mit Pulver **(9)** gefüllten Behälters **(6)** in den Sammelbehälter **(7)** oder im Prozess des Befüllens eines leeren Behälters **(6)** mit Pulver **(9)** aus dem Vorratsbehälter **(8)** zum Einsatz kommt; oder
b) die Anlage alternativ ausschliesslich zur Kontrolle der Eigenschaften des gehandhabten Pulvers **(9)** mit Benutzung des Probewerkzeugs **(39)** dient.

11. Anlage nach Anspruch 10, **dadurch gekennzeichnet, dass**
a) die Schleuse **(23)** auch zum Ausbringen von entleerten oder befüllten Behältern **(6)** aus der Arbeitskammer **(11)** sowie auch zum Ein- und Ausbringen von mit Pulver **(9)** gefüllten Behältern **(6)** in bzw. aus der Arbeitskammer **(11)** zwecks Entnahme einer Testmenge mit dem Probewerkzeug **(39)** zur Kontrolle der Eigenschaften des gehandhabten Pulvers **(9)** nutzbar ist; oder
b) zum Ausbringen von entleerten oder befüllten Behältern **(6)** aus der Arbeitskammer **(11)** sowie auch zum Ein- und Ausbringen von mit Pulver **(9)** gefüllten Behältern **(6)** in bzw. aus der Arbeitskammer **(11)** zwecks Entnahme einer Testmenge mit dem Probewerkzeug **(39)** zur Kontrolle der Eigenschaften des gehandhabten Pulvers **(9)** am Containment **(1)** eine zweite Schleuse oder ein Mousehole vorgesehen ist.

12. Anlage nach zumindest einem der Ansprüche 1 bis 11, **dadurch gekennzeichnet, dass** für den Prozess des Befüllens eines leeren Behälters **(6)** mit Pulver **(9)** aus dem Vorratsbehälter **(8)** zwischen Vorratsbehälter **(8)** und Transferkopf **(4)** eine Dosiervorrichtung **(80)** zur Zuteilung der gewünschten Füllmenge an Pulver **(9)** angeordnet ist.

13. Anlage nach zumindest einem der Ansprüche 1 bis 12, **dadurch gekennzeichnet, dass**
a) der zum Sammelbehälter **(7)** zugehörige Transferkopf **(4)** am Gehäuse **(10)** des Containments **(1),** vorzugsweise an einem Bodenelement, verankert ist und sich ein Kanalstück vom Transferkopf **(4)** zum Sammelbehälter **(7)** erstreckt; und
b) der zum Vorratsbehälter **(8)** zugehörige Transferkopf **(4)** am Gehäuse **(10)** des Containments **(1),** vorzugsweise an einem Deckenelement, verankert ist.

## Claims

1. Installation having a containment **(1)** for the aseptic decanting of a powder **(9),** specifically for emptying a container **(6)** filled with powder **(9)** into a collecting container **(7)** and/or for filling a container **(6)** with powder **(9)** from a storage container **(8),** wherein:
a) the containment **(1)** has a working chamber **(11)** surrounded by a housing (**10**);
b) a robot **(17)** is installed in the containment **(1),** said robot **(17)** having an arm arrangement **(19)** that is movable through a pivoting range;
c) when a collecting container **(7)** is present, it has an inlet that leads in from the working chamber **(11)** and when a storage container **(8)** is present, it has an outlet that leads out into the working chamber **(11);** and
d) the container **(6)** is closable at least with a first closure element **(61),** **characterized in that**
e) the arm arrangement **(19)** is connected to a tool carrier **(3)** which is equipped on its base **(30)** at least with clamping elements **(32)** for taking hold of the container **(6),** a vacuum lifter **(33)** for taking hold of the first closure element **(61),** and a passive part **(31)** of a double flap;
f) a transfer head **(4)** is mounted at the inlet into the collecting container **(7)** and/or at the outlet of the storage container **(8),** said transfer head(s) **(4)** projecting respectively into the working chamber **(11);** and
g) the passive part **(31)** together with an active part **(41)** contained in the transfer head **(4)** forms the double flap.

2. Installation according to Claim 1, **characterized in that**
a) the base **(30)** of the tool carrier **(3)** has a connection flange **(300)** for connecting to the arm arrangement **(19),** wherein a weighing cell **(302)** can sit in the connection flange **(300);** and
b) the base **(30)** has positioning members **(301)** which are intended for connecting in a form- and force-fitting manner to complementary locking members **(401)** located on a base **(40)** of the transfer head **(4),** and ensure the pressure-tight assembly between the tool carrier **(3)** and transfer head **(4).**

3. Installation according to at least one of Claims 1 and 2, **characterized in that**
a) the base **(30)** of the tool carrier **(3)** is equipped to temporarily receive a suction tool **(34)** or a rinsing and sterilizing tool **(35)** or a crimping tool **(36);**
b) the clamping elements **(32)** serve on their own or additionally for fixing the tools **(34,35,36)** to the base **(30)** of the tool carrier **(3);**
c) the suction tool **(34)** serves, within the working chamber **(11),** for cleaning the tool carrier **(3)** and first closure elements **(61);**
d) the rinsing and sterilizing tool **(35)** serves, within the working chamber **(11),** to clean and sterilize the collecting container **(7),** including the passive part **(31)** and the active part **(41)** of the double flap; and
e) the crimping tool **(36)** serves, within the working chamber **(11),** to attach a second closure element **(62)** to the container **(6).**

4. Installation according to Claim 3, **characterized in that** the tools **(34,35,36),** within the working chamber **(11),** are deposited releasably at a parking station **(14)** to be used for access with the tool carrier **(3)** installed on the arm arrangement **(19)** of the robot **(17).**

5. Installation according to at least one of Claims 1 to 4, **characterized in that** the tool carrier **(3),** in its complete equipment, also has:
a) a vibrator **(37)** for detaching residual powder **(9)** from a container **(6)** to be emptied;
b) a pulling hook **(38)** for removing a second closure element **(62)** that may be present on a container **(6)** to be emptied; and
c) a sampling tool **(39)** for taking a sample of the powder **(9)** for control purposes.

6. Installation according to Claims 1 and 3, **characterized in that**
a) the first closure element **(61)** is in the form of a cover placed on the mouth of the container **(6)** or of a stopper inserted into the mouth of the container **(6);** and
b) the second closure element **(62)** is provided as a crimped cap attached to the container **(6)** over the first closure element **(61).**

7. Installation according to at least one of Claims 1 to 6, **characterized in that**,
a) to introduce the tool carrier **(3)** into the working chamber **(11),** in a sterile state, a hermetically covered transfer container **(2)** is provided and the housing **(10)** has a transfer port **(12);**
b) the transfer container **(2)** is intended to receive the tool carrier **(3)** and to dock with the transport port **(12);** and,
c) in the state of the transfer container **(2)** docked with the transfer port **(12),** with the transport port **(12)** and transfer container **(2)** open, the tool carrier **(3)** can be pulled out of the transfer container **(2)** into the working chamber **(11)** by the accessing robot **(17).**

8. Installation according to at least one of Claims 1 to 7, **characterized in that**,
a) to introduce containers **(6)** to be emptied or filled into the working chamber **(11),** in a decontaminated state, a hermetically covered airlock **(23)** is provided and the housing (**10**) has an airlock port **(13);**
b) the airlock **(23)** is intended to receive containers **(6)** and to dock with the airlock port **(13);** and
c) in the state of the airlock **(23)** docked with the airlock port **(12),** with the airlock port **(13)** and airlock **(23)** open, the containers **(6)** can be pulled out of the airlock **(23)** into the working chamber **(11)** by the accessing robot **(17)** or pass into the working chamber **(11)** by means of a conveyor device.

9. Installation according to at least one of Claims 2 to 8, **characterized in that** the weighing cell **(302)** sitting in the connection flange (300) serves for comparative weight determination, namely:
a) in the process of emptying a container **(6)** filled with powder **(9)** into the collecting container **(7),** between the container **(6)** filled with powder **(9)** in the starting situation and the emptied container **(6);** or
b) in the process of filling an empty container **(6)** with powder **(9)** from the storage container **(8),** between the empty container **(6)** in the starting situation and the container **(6)** filled with powder **(9).**

10. Installation according to at least one of Claims 5 and 7 to 9 (the last are dependent on Claim 5), **characterized in that**
a) the sampling tool **(39)** provided for taking a sample of powder **(9)** for control purposes is used in the process of emptying a container **(6)** filled with powder **(9)** into the collecting container **(7)** or in the process of filling an empty container **(5)** with powder **(9)** from the storage container **(8);** or
b) the installation alternatively serves only for checking the properties of the handled powder **(9)** using the sampling tool **(39).**

11. Installation according to Claim 10, **characterized in that**
a) the airlock **(23)** is also usable for discharging emptied or filled containers **(6)** from the working chamber **(11)** and also for introducing containers **(6)** filled with powder **(9)** into and discharging them from the working chamber **(11)** for the purpose of taking a test quantity with the sampling tool **(39)** in order to check the properties of the handled powder **(9);** or
b) a second airlock or a mousehole is provided on the containment **(1)** to discharge emptied or filled containers **(6)** from the working chamber **(11)** and also for introducing containers **(6)** filled with powder **(9)** into and discharging them from the working chamber **(11)** for the purpose of taking a test quantity with the sampling tool **(39)** in order to check the properties of the handled powder **(9).**

12. Installation according to at least one of Claims 1 to 11, **characterized in that** a metering apparatus **(80)** for apportioning the desired filling quantity of powder **(9)** is arranged between the storage container **(8)** and transfer head **(4)** for the process of filling an empty container **(6)** with powder **(9)** from the storage container **(8).**

13. Installation according to at least one of Claims 1 to 12, **characterized in that**
a) the transfer head **(4)** belonging to the collecting container **(7)** is anchored to the housing (**10**) of the containment **(1),** preferably to a floor element, and a duct piece extends from the transfer head **(4)** to the collecting container **(7);** and
b) the transfer head **(4)** belonging to the storage container **(8)** is anchored to the housing **(10)** of the containment **(1),** preferably to a ceiling element.

## Revendications

1. Installation munie d'une enceinte de confinement **(1)** pour le transvasement aseptique d'une poudre **(9),** à savoir pour vider un récipient **(6)** rempli de poudre **(9)** dans un récipient de collecte **(7)** et/ou pour remplir un récipient **(6)** avec de la poudre **(9)** à partir d'un récipient de stockage **(8):**
a) l'enceinte de confinement **(1)** comprenant une chambre de travail **(11)** entourée d'un boîtier **(10),** à condition que;
b) un robot **(17)** étant installé dans l'enceinte de confinement **(1),** lequel possède un agencement de bras **(19)** mobile sur une zone de pivotement;
c) en présence d'un récipient de collecte **(7),** celui-ci ayant une entrée arrivant de la chambre de travail **(11)** et, en présence d'un récipient de stockage **(8),** celui-ci ayant une sortie partant dans la chambre de travail **(11);** et
d) le récipient **(6)** pouvant être fermé au moins par un premier élément de fermeture **(61),** **caractérisé en ce que**
e) l'agencement de bras **(19)** est relié à un porte-outil **(3),** qui est équipé à sa base **(30)** au moins d'éléments de serrage **(32)** pour saisir le récipient **(6),** d'un élévateur à vide **(33)** pour saisir le premier élément de fermeture **(61),** ainsi que d'une partie passive **(31)** d'un double clapet;
f) une tête de transfert **(4)** est montée à l'entrée du récipient de collecte **(7)** et/ou à la sortie du récipient de stockage **(8),** qui font saillie respectivement dans la chambre de travail **(11);** et
g) la partie passive **(31)** forme, conjointement avec une partie active **(41)** contenue dans la tête de transfert **(4),** le double clapet.

2. Installation selon la revendication 1, **caractérisée en ce que**
a) la base (30) du porte-outil **(3)** possède une bride de raccordement **(300)** pour la liaison à l'agencement de bras **(19),** une cellule de pesée **(302)** pouvant se trouver dans la bride de raccordement **(300);** et
b) la base **(30)** comprend des organes de positionnement **(301),** qui sont destinés à la liaison par accouplement de forme et de force avec des organes d'arrêt complémentaires **(401)** qui se trouvent sur une base **(40)** de la tête de transfert **(4),** et qui assurent l'assemblage étanche à la pression entre le porte-outil **(3)** et la tête de transfert **(4).**

3. Installation selon au moins l'une quelconque des revendications 1 et 2, **caractérisée en ce que**
a) la base **(30)** du porte-outil **(3)** est équipée pour recevoir temporairement un outil d'aspiration **(34)** ou un outil de rinçage et de stérilisation **(35)** ou un outil de rabattement **(36);**
b) les éléments de serrage **(32)** servent, seuls ou en outre, à fixer les outils **(34,35,36)** à la base **(30)** du porte-outil **(3);**
c) l'outil d'aspiration **(34)** sert, à l'intérieur de la chambre de travail **(11),** à nettoyer le porte-outil **(3)** et les premiers éléments de fermeture **(61);**
d) l'outil de rinçage et de stérilisation **(35)** sert, à l'intérieur de la chambre de travail **(11),** à nettoyer et à stériliser le récipient de collecte **(7),** y compris la partie passive **(31)** et la partie active **(41)** du double clapet; et
e) l'outil de rabattement **(36)** sert, à l'intérieur de la chambre de travail **(11),** à disposer un deuxième élément de fermeture **(62)** sur le récipient **(6).**

4. Installation selon la revendication 3, **caractérisée en ce que** les outils **(34,35,36)** sont déposés à l'intérieur de la chambre de travail **(11)** de manière amovible sur une station de stationnement **(14)** pour être utilisés pour l'accès avec le porte-outil **(3)** installé sur l'agencement de bras **(19)** du robot **(17).**

5. Installation selon au moins l'une quelconque des revendications 1 à 4, **caractérisée en ce que** le porte-outil (**3**), dans l'équipement complet, comprend également:
a) un vibrateur **(37)** pour détacher un reste de poudre **(9)** d'un récipient **(6)** à vider;
b) un crochet d'arrachage **(38)** pour enlever un deuxième élément de fermeture **(62)** éventuellement présent sur un récipient **(6)** à vider; et
c) un outil d'échantillonnage **(39)** pour prélever un échantillon de poudre **(9)** à des fins de contrôle.

6. Installation selon les revendications 1 et 3, **caractérisée en ce que**
a) le premier élément de fermeture **(61)** est configuré sous la forme d'un couvercle placé sur l'embouchure du récipient **(6)** ou sous la forme d'un bouchon inséré dans l'embouchure du récipient **(6);** et
b) le deuxième élément de fermeture **(62)** est réalisé sous la forme d'un capuchon à bord rabattu disposé sur le récipient **(6),** au-dessus du premier élément de fermeture **(61).**

7. Installation selon au moins l'une quelconque des revendications 1 à 6, **caractérisée en ce que**
a) pour l'introduction du porte-outil **(3)** dans la chambre de travail **(11),** en condition stérile, un récipient de transfert **(2)** enveloppé hermétiquement est prévu et le boîtier **(10)** comprend un port de transfert **(12);**
b) le récipient de transfert **(2)** est destiné à recevoir le porte-outil **(3)** et à s'arrimer au port de transfert **(12);** et
c) à l'état du récipient de transfert **(2)** arrimé au port de transfert **(12),** lorsque le port de transfert **(12)** et le récipient de transfert **(2)** sont ouverts, le porte-outil **(3)** peut être tiré hors du récipient de transfert **(2)** dans la chambre de travail **(11)** avec le robot **(17)** qui y accède.

8. Installation selon au moins l'une quelconque des revendications 1 à 7, **caractérisée en ce que**
a) pour l'introduction de récipients **(6)** à vider ou à remplir dans la chambre de travail **(11),** en condition décontaminée, un sas **(23)** enveloppé hermétiquement est prévu et le boîtier **(10)** comprend un port de sas **(13);**
b) le sas **(23)** est destiné à recevoir des récipients **(6)** et à s'arrimer au port de sas **(13);** et
c) à l'état du sas **(23)** arrimé au port de sas **(13),** lorsque le port de sas **(13)** et le sas **(23)** sont ouverts, les récipients **(6)** peuvent être tirés hors du sas **(23)** dans la chambre de travail **(11)** par le robot **(17)** qui y accède ou atteignent la chambre de travail **(11)** au moyen d'un appareil de transport.

9. Installation selon au moins l'une quelconque des revendications 2 à 8, **caractérisée en ce que** la cellule de pesée **(302)** se trouvant dans la bride de raccordement **(300)** sert à une détermination comparative du poids, à savoir:
a) dans le processus de vidage d'un récipient **(6)** rempli de poudre **(9)** dans le récipient de collecte **(7),** entre le récipient **(6)** rempli de poudre **(9)** dans la situation initiale et le récipient **(6)** vidé; ou
b) dans le processus de remplissage d'un récipient **(6)** vide avec de la poudre **(9)** à partir du récipient de stockage **(8),** entre le récipient (6) vide dans la situation initiale et le récipient **(6)** rempli de poudre **(9).**

10. Installation selon au moins l'une quelconque des revendications 5, 7 à 9 (ces dernières dépendant de la revendication 5), **caractérisée en ce que**
a) l'outil d'échantillonnage **(39)** prévu pour prélever un échantillon de la poudre **(9)** à des fins de contrôle est utilisé dans le processus de vidage d'un récipient **(6)** rempli de poudre **(9)** dans le récipient de collecte **(7)** ou dans le processus de remplissage d'un récipient **(6)** vide avec de la poudre **(9)** à partir du récipient de stockage **(8);** ou
b) en alternative, l'installation sert exclusivement au contrôle des propriétés de la poudre manipulée **(9)** en utilisant l'outil d'échantillonnage **(39).**

11. Installation selon la revendication 10, **caractérisée en ce que**
a) le sas **(23)** sert également à décharger de la chambre de travail **(11)** des récipients **(6)** vidés ou remplis, ainsi qu'à introduire et à décharger des récipients **(6)** remplis de poudre **(9)** dans ou hors de la chambre de travail **(11)** à des fins de prélèvement d'une quantité d'essai avec l'outil d'échantillonnage **(39)** pour contrôler les propriétés de la poudre manipulée **(9);** ou
b) pour le déchargement de récipients **(6)** vidés ou remplis de la chambre de travail **(11),** ainsi que pour l'introduction et le déchargement de récipients **(6)** remplis de poudre **(9)** dans ou hors de la chambre de travail **(11)** à des fins de prélèvement d'une quantité d'essai avec l'outil d'échantillonnage **(39)** pour le contrôle des propriétés de la poudre manipulée **(9),** un deuxième sas ou un trou de souris est prévu sur l'enceinte de confinement **(1).**

12. Installation selon au moins l'une quelconque des revendications 1 à 11, **caractérisée en ce que**, pour le processus de remplissage d'un récipient **(6)** vide avec de la poudre **(9)** à partir du récipient de stockage **(8),** un dispositif de dosage **(80)** est agencé entre le récipient de stockage **(8)** et la tête de transfert **(4)** pour l'attribution de la quantité de remplissage souhaitée de poudre **(9).**

13. Installation selon au moins l'une quelconque des revendications 1 à 12, **caractérisée en ce que**
a) la tête de transfert **(4)** associée au récipient de collecte **(7)** est ancrée au boîtier **(10)** de l'enceinte de confinement **(1),** de préférence à un élément de fond, et une partie de canal s'étend de la tête de transfert **(4)** jusqu'au récipient de collecte **(7);** et
b) la tête de transfert **(4)** associée au récipient de stockage **(8)** est ancrée sur le boîtier **(10)** de l'enceinte de confinement **(1),** de préférence à un élément de plafond.
